# EUROPEAN PATENT APPLICATION

(11) **EP 4 567 296 A1**
(43) Date of publication of application: **11.06.2025**
(21) Application number: 24216378.0
(22) Date of filing: 29.11.2024
(51) Int. Cl.: F16F 9/02, B62K 25/06, F16F 9/49

(54) **BICYCLE AIR SPRING**

(30) Priority: 06.12.2023 US 202363606745 P; 26.11.2024 US 202418960998
(71) Applicant: Specialized Bicycle Components, Inc., Morgan Hill, CA 95037 (US)
(72) Inventor: TRUJILLO, Anthony Richard, Morgan Hill, 95037 (US); FERRO, Chance Austen, Morgan Hill, 95037 (US); McANDREWS,, Michael Lawrence, Morgan Hill, 95037 (US)
(74) Representative: Straus, Alexander

(57) **Abstract**

An air spring (1700; 1800) includes a first body (1701; 1801); a first piston (1721; 1821) sealed against a first wall (1791; 1891) of the first body (1701; 1801); a cup (1702; 1802) having a second wall (1792; 1892); and a second piston (1722; 1822), wherein the cup (1702; 1802) and the second piston (1722; 1822) are configured such that: in an extended position, the second piston (1722; 1822) does not seal against the second wall (1792; 1892), in an intermediate position, the second piston (1722; 1822) seals against the second wall (1792; 1892), and as the first piston (1721; 1821) moves from the intermediate position to a compressed position, a spring rate of the air spring will increase at a higher rate than if the second piston (1722; 1822) were not sealed against the second wall.

## Description

### CRO S S-REFERENCE TO RELATED APPLICATIONS

This application claims the benefit of U.S. Provisional Application No. 63/606,745, titled BICYCLE AIR SPRING, filed December 6, 2023, which is hereby incorporated by reference herein in its entirety.

### TECHNICAL FIELD

The present technology relates to bicycle air springs and, in particular, bicycle air springs suitable for use in connection with off-road bicycles.

### DESCRIPTION OF THE RELATED TECHNOLOGY

Off-road bicycles, or mountain bikes, may be equipped with front and rear suspension assemblies operably positioned between the frame of the bicycle and the front and rear wheels, respectively. Providing front and rear suspension on a mountain bike potentially improves handling and performance by absorbing bumps, and other rough trail conditions, which may be encountered while riding off-road. Because a mountain bike is propelled solely by power output from the rider, it is desirable that the front and rear suspension assemblies be lightweight. Suspension systems of engine-driven vehicles commonly emphasize strength over weight and, therefore, have not been widely incorporated on mountain bikes. One way to reduce weight is to utilize an air spring instead of a conventional metal coil spring.

Bicycle shock absorbers having rider-adjustable compression and rebound damping characteristics have been used to match a desired level of pedaling efficiency and ride comfort with a type of terrain encountered. A rider may adjust the compression damping setting of a shock absorber to trade improved pedaling efficiency for improved bump absorption. For example, an adjustable shock absorber may desirably be set to a firm setting while a rider is on a steep hill climb to increase the amount of pedaling energy reaching the driven wheel and reduce the amount of pedaling energy dissipated by the suspension. Conversely, an adjustable shock absorber may desirably be set to a relatively soft compression damping setting where a rider is traveling fast downhill.

In addition, many bicycle shock absorbers have other rider-adjustable settings. For example, some bicycle shock absorbers allow the user to set the sag. Sag refers to the amount of movement experienced by the suspension under just the static load, or body weight, of the rider.

### SUMMARY

The systems, methods and devices described herein have innovative aspects, no single one of which is indispensable or solely responsible for their desirable attributes. Without limiting the scope of the claims, some of the advantageous features will now be summarized.

One aspect of the present invention is the realization that the load v. displacement curve of a conventional air spring may not be ideal for a mountain bike suspension system. In addition, a conventional air spring may experience spikes in the load v. displacement curve when the air spring experiences high velocities due to the adiabatic effect. Thus, there exists a need for an improved bicycle air spring. Accordingly, an improved air spring is disclosed herein.

According to some aspects, an air spring comprises: a first body comprising a first wall; a first piston slideably coupled to the first body, wherein the first piston comprises a seal that seals against the first wall, the first body and the first piston at least partially forming a first chamber having a volume containing an amount of gas, such that sliding of the first piston with respect to the first wall will change the volume of the first chamber; a second piston that is in a fixed position with respect to the first piston, the second piston comprising a smaller diameter than the first piston such that a seal of the second piston does not seal against the first wall, wherein the first piston and the second piston can move together between an extended position, an intermediate position, and a compressed position with respect to the first body; and a cup comprising a second wall that extends into the first chamber toward the first piston, the second wall positioned such that: in the extended position, the seal of the second piston does not seal against the second wall, and at least a portion of the amount of gas is positioned within the cup and at least a portion of the amount of gas is positioned radially outward of the second wall within a space between the cup and the first body, the amount of gas being able to flow between all areas where the amount of gas is contained; in the intermediate position, the seal of the second piston seals against the second wall, separating the amount of gas into a first portion of gas and a second portion of gas that are sealed off from one another, with at least a portion of the first portion of gas being positioned within the cup and at least a portion of the second portion of gas being positioned radially outward of the second wall within the space between the cup and the first body; and as the first piston and the second piston move from the intermediate position to the compressed position, a spring rate of the air spring will increase at a higher rate than if the second piston were not sealed against the second wall and the first portion of gas and the second portion of gas were not sealed off from one another.

In some aspects, the second piston comprises one or more voids that extend in a direction away from the cup such that, at least in the intermediate position, at least a portion of the first portion of gas is positioned outside of the cup. In some aspects, the one or more voids comprises one or more of: an annular groove or a blind hole extending in the direction away from the cup. In some aspects, the first piston and the second piston are part of a single body that can slide with respect to the first body. In some aspects, the air spring further comprises a second body that at least partially defines a second chamber, the second chamber being fluidly coupled to the first chamber such that: in the extended position, at least a portion of the amount of gas is positioned within the second chamber; and in the intermediate position, at least a portion of the second portion of gas is positioned within the second chamber. In some aspects, the second body is positioned such that the second chamber surrounds the first chamber. In some aspects, the second chamber is fluidly coupled to the first chamber through one or more flow passages that each remain open throughout a full stroke of the air spring.

According to some aspects, an air spring comprises: a first body comprising a first wall; a first piston slideably coupled to the first body, wherein the first piston comprises a seal that seals against the first wall, the first body and the first piston at least partially forming a first chamber having a volume containing an amount of gas, such that sliding of the first piston with respect to the first wall will change the volume of the first chamber; a cup that is in a fixed position with respect to the first piston, the cup comprising a second wall that extends into the first chamber away from the first piston, wherein the first piston and the cup can move together between an extended position, an intermediate position, and a compressed position with respect to the first body; and a second piston that is in a fixed position with respect to the first body, the second piston comprising a smaller diameter than the first piston such that a seal of the second piston does not seal against the first wall, wherein the cup and the second piston are configured such that: in the extended position, the seal of the second piston does not seal against the second wall, and at least a portion of the amount of gas is positioned within the cup and at least a portion of the amount of gas is positioned radially outward of the second wall within a space between the cup and the first body, the amount of gas being able to flow between all areas where the amount of gas is contained; in the intermediate position, the seal of the second piston seals against the second wall, separating the amount of gas into a first portion of gas and a second portion of gas that are sealed off from one another, with at least a portion of the first portion of gas being positioned within the cup and at least a portion of the second portion of gas being positioned radially outward of the second wall within the space between the cup and the first body; and as the first piston and the cup move from the intermediate position to the compressed position, a spring rate of the air spring will increase at a higher rate than if the second piston were not sealed against the second wall and the first portion of gas and the second portion of gas were not sealed off from one another.

In some aspects, the air spring further comprises a bushing slidably engaged with the first wall to center the cup with respect to the first wall, wherein the bushing does not pneumatically seal against the first wall. In some aspects, the cup and the first piston are part of single body that can slide with respect to the first body. In some aspects, the second piston is fixed to the first body by a shaft that extends into the first chamber toward the first piston. In some aspects, the second piston comprises a seal groove that defines a first plane at a first end of the groove and a second plane at a second end of the groove, and wherein, in the extended position, at least a portion of the amount of gas is positioned on both sides of both the first plane and the second plane. In some aspects, the second piston comprises a seal groove that defines a first plane at a first end of the groove and a second plane at a second end of the groove, wherein, in the intermediate position and the compressed position, the first end of the groove is exposed to the first portion of gas and the second end of the groove is exposed to the second portion of gas, and wherein the second piston comprises one or more voids that enable one or both of the following: at least a portion of the first portion of gas to be positioned beyond the first plane in a direction away from the first piston, or at least a portion of the second portion of gas to be positioned within the cup beyond the second plane in a direction toward the first piston. In some aspects, the one or more voids comprises one or more of: an annular groove or a blind hole.

According to some aspects, an air spring comprises: a first body comprising a first wall that at least partially defines a first chamber; a second body that at least partially defines a second chamber, wherein the first wall comprises one or more openings that allow fluid communication between the first chamber and the second chamber; a piston slideably coupled to the first body, wherein the piston comprises a seal that seals against the first wall such that sliding of the first piston with respect to the first wall will change a volume of a gas within the first chamber and the second chamber; and a flow restrictor that is biased to move with the piston, but is movable relative the piston when further movement of the flow restrictor is blocked, wherein the flow restrictor is shaped to restrict flow through the one or more openings when the flow restrictor covers the one or more openings, wherein the piston can move between an extended position, an intermediate position, and a compressed position with respect to the first body, and the piston and flow restrictor and configured such that: in the extended position, the flow restrictor is a first distance from the piston and the flow restrictor does not cover the one or more openings; in the intermediate position, the flow restrictor remains the first distance from the piston and the flow restrictor covers the one or more openings to restrict flow through the one or more openings; and as the piston moves from the intermediate position to the compressed position, the piston will move toward the flow restrictor until the flow restrictor is a second distance from the piston, less than the first distance, and the flow restrictor will remain covering the one or more openings to restrict flow through the one or more openings, and a spring rate of the air spring will increase at a higher rate than if flow were not restricted through the one or more openings.

In some aspects, the flow restrictor comprises an annular ring that includes one or more openings through which a gas present in the first chamber can pass. In some aspects, the air spring further comprises a spacer extending into the first chamber from an end of the first body, the spacer being shaped and positioned to engage the central opening of the flow restrictor when in the intermediate position or the compressed position. In some aspects, the spacer and the flow restrictor each comprise acetal or polytetrafluoroethylene. In some aspects, the second body is positioned such that the second chamber surrounds the first chamber. In some aspects, the one or more openings are positioned at an end of the first wall. In some aspects, the flow restrictor is compliantly coupled to the piston by a mechanical spring.

According to some aspects, there is an air spring having a first body and a first piston cooperating with the first body to define a pressurized first chamber including a gas. The first piston is configured to slideably move relative to the first body. The air spring also includes a pressurized second chamber and a flow passage between the first chamber and the second chamber. The pressurized first chamber and pressurized second chamber desirably exert expansion force on the air spring. The air spring has a seal to selectively permit, prevent, and/or restrict flow between the first chamber and the second chamber. The air spring has a fully extended position and a fully compressed position and is configured such that during the majority of the movement of the air spring from the fully extended position to the fully compressed position flow is permitted from the first chamber to the second chamber and while the air spring is adjacent the fully compressed position, the seal prevents or restricts flow between the first chamber and the second chamber. Flow can be prevented or restricted when the air spring has moved greater than 75%, greater than 80%, greater than 85%, greater than 90%, greater than 95% or greater than 97% of the total travel distance.

In some aspects, the seal may at least partially comprise a second piston or plunger cooperating with a partition separating the first chamber and the second chamber.

In some aspects, the seal at least partially comprises a bushing coupled to the first piston.

In some aspects, the seal comprises an elastomer seal.

In some aspects, the seal may be positioned to move with the first piston, such that when said air spring is adjacent the fully compressed position, the seal blocks, prevents, and/or restricts flow from at least a portion of the second chamber to the first chamber.

In some aspects, the blocking, prevention, or restriction of flow from the first chamber to the second chamber does not require input to a hand control.

In some aspects, the second piston or plunger is disposed at a first end of the first chamber.

In some aspects, the first piston is affixed to the first body.

In some aspects, the first chamber is located substantially within the first body.

In some aspects, the second chamber is located substantially within the first body.

In some aspects, at least a portion of the second chamber surrounds the first chamber.

In some aspects, the second chamber is located substantially between the first body and a second body that substantially surrounds the first body.

In some aspects, the second chamber is located substantially within a second body that is positioned to move with the first piston relative to the first body.

In some aspects, the air spring further comprises: a second piston; and a shaft that couples the second piston to the first piston such that the second piston will move with the first piston relative to the first body, wherein the second piston comprises the seal.

In some aspects, the first piston seals against a first internal wall of the first body, and the second piston seals against a second internal wall of the first body to prevent or restrict flow between the first chamber and the second chamber, wherein the second internal wall comprises a smaller diameter than the first internal wall.

In some aspects, the seal is positioned to move with the first piston relative to the first body, and the air spring further comprises a stop or rod extending toward the first piston, the stop or rod positioned such that, while the air spring is adjacent the fully compressed position, the seal seals against the stop or rod to prevent or restrict flow between the first chamber and the second chamber.

In some aspects, the air spring further comprises a second piston and a pressurized third chamber, wherein the second piston separates the third chamber from the second chamber.

In some aspects, the air spring further comprises: a pressurized third chamber; a flow passage between the first chamber and the third chamber, wherein the seal also selectively permits, prevents, and/or restricts flow between the first chamber and the third chamber, and wherein the air spring is configured such that, while the air spring is adjacent the fully extended position, the seal prevents or restricts flow between the first chamber and the third chamber.

In one aspect, the air spring has a first chamber, a second chamber and a third chamber. Desirably, the pressurized first chamber, the pressurized second chamber and the pressurized third chamber exert expansion force on the air spring force.

In some aspects, the air spring has a spring curve, wherein the spring curve comprises a bump zone comprising the range of travel of the air spring between 30% compression and 70% compression of the air spring, and wherein the air spring is configured to provide an average spring rate greater than 8 lbs./mm in the bump zone of the spring curve of the air spring, greater than 9 lbs./mm in the bump zone of the spring curve of the air spring, greater than 10 lbs./mm in the bump zone of the spring curve of the air spring, greater than 11 lbs./mm in the bump zone of the spring curve of the air spring or greater than 12 lbs./mm in the bump zone of the spring curve of the air spring.

In certain embodiments, the above air spring overcomes the drawbacks of the prior art used on mountain bike suspensions components. Air springs in general have a progressive nature to the spring curve they produce, and this progressive ramp at the end of the spring curve is what most shock and fork designs use to control the end of stroke bottoming forces. The issue with this design/tuning approach is that the slope of the spring curve starts rising in the mid stroke to achieve the spring force needed to control bottom out. The problem is by starting the slope rise so early in the stroke, performance in the bump absorption zone of the suspension travel is compromised.

One aspect is to control the ending spring force independently from the primary spring force. In one aspect, this enables the two spring curves (one based on the first chamber alone and the other based on the first chamber and second chamber together) to be tuned independently from one another. In another aspect, when the two spring curves are tuned, they desirably scale up and down in spring force while retaining the same relationship. This is particularly desirable where the air pressure in the air spring is adjusted to correspond to the weight of the rider, such as when the "sag" is set.

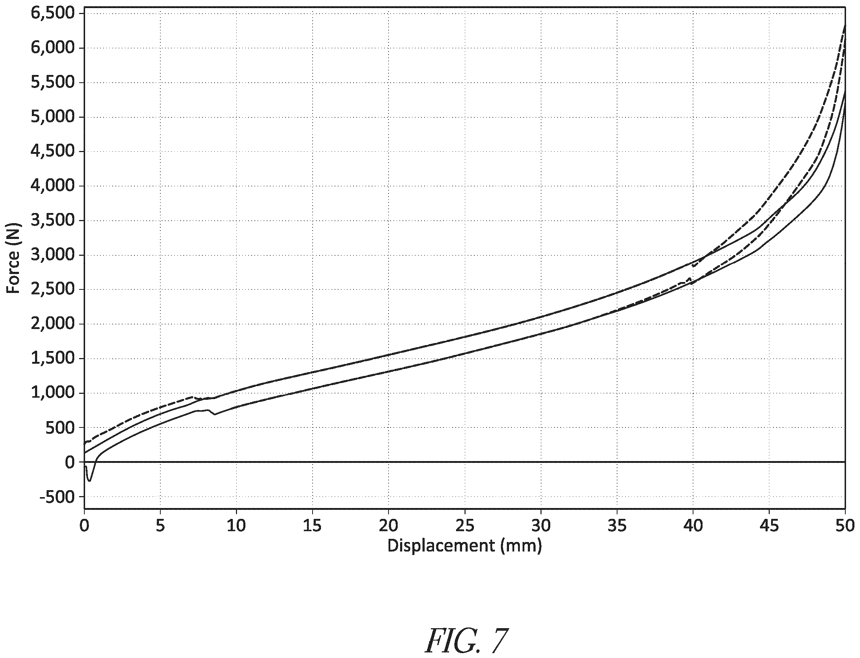

Advantageously, in one aspect the resistance force (desirably the air resistance force) to bottom out is at least 2500 N (Newtons), at least 2600 N, at least 2700 N, at least 2800 N, at least 2900 N, at least 3000 N, at least 3500 N, at least 4000 N, at least 4500 N, at least 5000 N, at least 5500 N (Newtons), at least 5600 N, at least 5700 N, at least 5800 N, at least 5900 N, at least 6000 N, at least 6100 N or at least 6200 N at the fully-compressed position or 100% of travel. In some aspects, the resistance force (desirably the air resistance force) to bottom out is at least 5500 N (Newtons), at least 5600 N, at least 5700 N, at least 5800 N, at least 5900 N, at least 6000 N, at least 6100 N or at least 6200 N at 98% of travel. In one aspect, the resistance force to bottom out is at least 200 lbs. (pounds), at least 220 lbs., at least 240 lbs., at least 260 lbs., at least 280 lbs. or at least 300 lbs. at 70%, 75%, 80%, 85% or 90% of travel. For example, the amount of travel graphed in FIG. 7 is 50 mm (millimeters) and 90% of travel corresponds to 45 mm of travel (the first vertical line spaced inward from the right side of the graph).

In another aspect, the slope of the spring curve is less than 500 lbs. per inch of travel, less than 475 lbs. per inch of travel, less than 450 per inch of travel, less than 425 lbs. per inch of travel or less than 400 lbs. per inch of travel at 5/8 of the total travel distance, ¾ of the total travel distance, 13/16 of total travel distance or 7/8 of total travel (moving from fully extended to fully compressed).

In another aspect, variation in the slope of the spring curve in the bump zone is not more than 5%, no more than 10%, no more than 15%, no more than 20% or no more than 25%. In another aspect, variation in the slope of the spring curve in the bump zone is between 0% and 25%, 5% and 25%, 5% and 20%, 10% and 20% or 15% and 25%. In another aspect, variation in the slope of the spring curve in the bottom out zone is at least 50%, is at least 60%, is at least 70%, is at least 80%, is at least 90%, is at least 100%, is at least 125%, is at least 150%, is at least 175% or is at least 200%. In another aspect, variation in the slope of the spring curve in the bottom out zone is between 50% and 500%, between 75% and 300%, between 100% and 300% or between 150% and 250%. In another aspect, the variation in the slope of the spring curve in the bump zone and the variation in the slope of the spring curve in the bottom out zone is some combination of the foregoing variations. For example, (1) the variation in the slope of the spring curve in the bump zone is not more than 5% and (2) the variation of the slope of the spring curve in the bottom out zone is at least 50%, is at least 60%, is at least 70%, is at least 80%, is at least 90%, is at least 100%, is at least 125%, is at least 150%, is at least 175% or is at least 200%.

In one aspect, the foregoing ranges are the same for the front fork and the rear shock absorber. In another aspect, the front fork and the rear shock absorber have differing variations in the spring curve in the initial zone, the bump zone or the bottom out zone or in some combination of these zones.

### BRIEF DESCRIPTION OF THE DRAWINGS

The above-mentioned aspects, as well as other features, aspects, and advantages of the present technology will now be described in connection with various embodiments, with reference to the accompanying drawings. The illustrated embodiments, however, are merely examples and are not intended to be limiting. Like reference numbers and designations in the various drawings indicate like elements.
FIG. 1 illustrates a side view of an off-road bicycle, including one or more embodiments of air springs.
FIG. 2 illustrates a side view of one embodiment of an air spring.
FIG. 3A illustrates a cross section view of the air spring of FIG. 2 in a fully extended position.
FIG. 3B illustrates a cross section view of the air spring of FIG. 2 in a fully compressed position.
FIG. 3C illustrates a partial cross section view of the air spring of FIG. 2.
FIG. 4A illustrates a cross section view of another embodiment of an air spring, in a fully extended position.
FIG. 4B illustrates a cross section view of the air spring of FIG. 4A in a fully compressed position.
FIG. 5A illustrates a cross section view of another embodiment of an air spring, in a fully extended position.
FIG. 5B illustrates a cross section view of the air spring of FIG. 5A in a fully compressed position.
FIG. 6 illustrates an exploded view of a prototype of the air spring of FIG. 5A.
FIG. 7 illustrates a compression ratio chart for the prototype air spring of FIG. 6.
FIG. 8 illustrates a compression ratio chart for the air spring of FIG. 4A.
FIG. 9A illustrates a schematic cross section view of another embodiment of an air spring, in an extended position.
FIG. 9B illustrates a schematic cross section view of the air spring of FIG. 9A in an intermediate compressed position.
FIG. 9C illustrates a schematic cross section view of the air spring of FIG. 9B in a further compressed position.
FIG. 10 illustrates a schematic longitudinal cross section view of another embodiment of an air spring.
FIG. 11A illustrates a side view of another embodiment of an air spring.
FIG. 11B illustrates a cross section view of the air spring of FIG. 11A.
FIG. 12A illustrates a side view of another embodiment of an air spring.
FIG. 12B illustrates a cross section view of the air spring of FIG. 12A.
FIG. 13A illustrates a side view of another embodiment of an air spring, in a fully extended position.
FIG. 13B illustrates a cross section view of the air spring of FIG. 13A, in the fully extended position.
FIG. 13C illustrates a cross section view of the air spring of FIG. 13A, in a compressed position.
FIG. 14A illustrates a side view of another embodiment of an air spring, in a fully extended position.
FIG. 14B illustrates a cross section view of the air spring of FIG. 14A, in the fully extended position.
FIG. 14C illustrates a cross section view of the air spring of FIG. 14A, in a compressed position.
FIG. 15A illustrates a side view of another embodiment of an air spring, in a fully extended position.
FIG. 15B illustrates a cross section view of the air spring of FIG. 15A, in the fully extended position.
FIG. 15C illustrates a cross section view of the air spring of FIG. 15A, in a compressed position.
FIG. 16A illustrates a side view of another embodiment of an air spring, in a fully extended position.
FIG. 16B illustrates a cross section view of the air spring of FIG. 16A, in the fully extended position.
FIG. 16C illustrates a cross section view of the air spring of FIG. 16A, in a compressed position.
FIG. 17A illustrates a cross section view of another embodiment of an air spring, with the air spring shown in an extended position.
FIG. 17B illustrates a cross section view of the air spring of FIG. 17A, in an intermediate position.
FIG. 17C illustrates a cross section view of the air spring of FIG. 17A, in a compressed position.
FIGS. 17D and 17E illustrate end and side views, respectively, of a sealhead of the air spring of FIG. 17A.
FIG. 18A illustrates a cross section view of another embodiment of an air spring, with the air spring shown in an extended position.
FIG. 18B illustrates a cross section view of the air spring of FIG. 18A, in an intermediate position.
FIG. 18C illustrates a cross section view of the air spring of FIG. 18A, in a compressed position.
FIG. 18D illustrates a perspective view of a sealhead and a second piston of the air spring of FIG. 18A.
FIG. 19A illustrates a cross section view of another embodiment of an air spring, with the air spring shown in an extended position.
FIG. 19B illustrates a cross section view of the air spring of FIG. 19A, in an intermediate position.
FIG. 19C illustrates a cross section view of the air spring of FIG. 19A, in a compressed position.
FIG. 19D illustrates a perspective view of a piston and flow restrictor of the air spring of FIG. 19A.

### DETAILED DESCRIPTION

In the following detailed description, reference is made to the accompanying drawings, which form a part of the present disclosure. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the Figures, can be arranged, substituted, combined, and designed in a wide variety of different configurations, all of which are explicitly contemplated and form part of this disclosure. For example, a system or device may be implemented or a method may be practiced using any number of the aspects set forth herein. In addition, such a system or device may be implemented or such a method may be practiced using other structure, functionality, or structure and functionality in addition to or other than one or more of the aspects set forth herein. Alterations and further modifications of the inventive features illustrated herein, and additional applications of the principles of the inventions as illustrated herein, which would occur to one skilled in the relevant art and having possession of this disclosure, are to be considered within the scope of the invention.

Descriptions of unnecessary parts or elements may be omitted for clarity and conciseness, and like reference numerals refer to like elements throughout. In the drawings, the size and thickness of layers and regions may be exaggerated for clarity and convenience.

Features of the present disclosure will become more fully apparent from the following description and appended claims, taken in conjunction with the accompanying drawings. It will be understood these drawings depict only certain embodiments in accordance with the disclosure and, therefore, are not to be considered limiting of its scope; the disclosure will be described with additional specificity and detail through use of the accompanying drawings. An apparatus, system or method according to some of the described embodiments can have several aspects, no single one of which necessarily is solely responsible for the desirable attributes of the apparatus, system or method. After considering this discussion, and particularly after reading the section entitled "Detailed Description" one will understand how illustrated features serve to explain certain principles of the present disclosure.

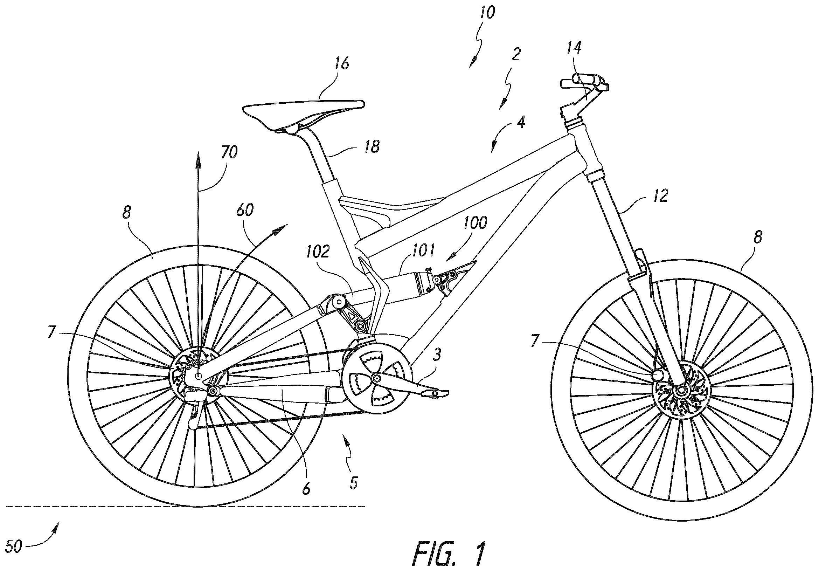

This application is directed to an improved air spring suitable for use on off-road bicycles. FIG. 1 illustrates a side view of an off-road bicycle 10, including one embodiment of an air spring 100, which in this case is part of a rear suspension. The air spring 100 may be replaced with any of the embodiments of rear-suspension style air springs disclosed herein, including but not limited to air springs 400, 500, 1100, 1200, 1700, 1800, and 1900, described below. The bicycle 10 includes a frame 2, preferably comprised of a generally triangular main frame portion 4 and an articulating frame portion, such as a subframe 6. As illustrated in FIG. 1, the subframe 6 is rotatably coupled to the main frame 4. A rear wheel 8 of the bicycle 10 is rotatably coupled to the subframe 6. In FIG. 1, the air spring 100 is illustrated in a fully extended position with the rear wheel 8 adjacent a reference plane 50. The reference plane 50 remains in the same position relative to the main frame 4 of the bicycle 10. As the subframe 6 rotates, the rear wheel 8 travels through an arc 60. The vertical movement 70 of the rear wheel 8 is referred to as the "rear wheel vertical range of travel." The vertical movement of the rear wheel can be measured from the reference plane 50.

As illustrated in FIG. 1, the bicycle 10 also includes a front wheel 8 carried by a front suspension assembly, or front fork 12. The fork 12 is secured to the main frame 4 by a handlebar assembly 14. The front suspension assembly or fork 12 may also include one or more embodiments of air springs as disclosed herein, including but not limited to fork-style air springs 1300, 1400, 1500, and 1600 described below. A seat 16 is connected to the frame 2 by a seat post 18, which is received within the seat tube of the main frame 4. The seat 16 provides support for a rider of the bicycle 10. A pedal crank assembly 3 is rotatably supported by the main frame 14 and drives a multi-speed chain drive arrangement 5, as is well known in the art. The bicycle 10 also includes front and rear brake systems 7 for slowing and stopping the bicycle 10. Although the front and rear brakes 7 are illustrated as disc type brakes, alternatively, rim type brakes may be provided, as will be appreciated by one of skill in the art. Rider controls (not shown) are commonly provided on the handlebar assembly 14 and are operable to control shifting of the multi-speed chain drive arrangement 5 and front and rear brake systems 7.

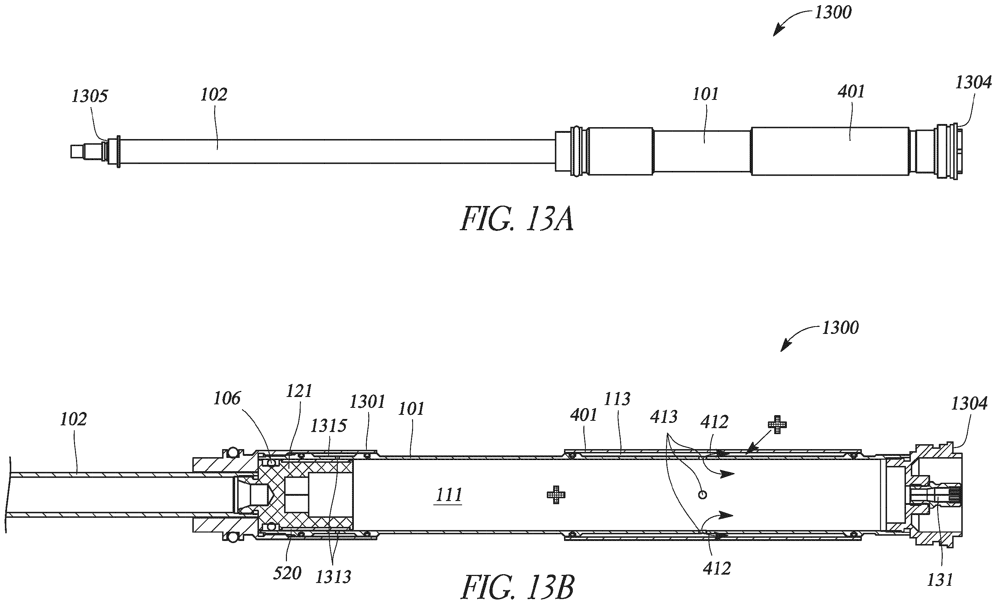

In some embodiments, the air spring 100 (and/or the one or more air springs of the front suspension assembly) can include a first member 101 and a second member 102 (in some embodiments also referred to as a third member 102). The first member 101 can be slideably coupled to the second member 102. The air spring 100 can be configured to force the first member 101 in one direction and the second member 102 in a second direction, opposite the second direction. As illustrated in FIG. 1, one portion of the air spring 100, such as for example the first member 101, can be rotatably coupled to the main frame 4 and another portion of the air spring 100, such as for example the second member 102, can be rotatably coupled the subframe 6, such that the air spring 100 can manipulate the rotation of the subframe 6, and thus, movement of the rear wheel 8 relative to the bicycle 10 frame 2. Similarly, an air spring in the front suspension assembly can include slideably coupled members 101, 102 (see, for example, FIG. 13A) that manipulate movement of the front wheel 8 relative to the main frame 4. The first member 101 can slide relative to the second member 102 between a fully extended position and a fully compressed position.

The air spring 100 has an "air spring range of travel" defined by the difference in length of the air spring 100 between the fully extended position and the fully compressed position. The "motion ratio" of the bicycle 10 is defined as the ratio of the rear wheel vertical range of travel to the air spring 100 range of travel. The "spring rate" of the air spring 100 is defined as the change in the force exerted by the air spring 100 divided by the change in length of the air spring 100. The spring rate of the air spring 100 can vary depending on position of the first member 101 relative to the second member 102. The "wheel rate" of the bicycle 10 is defined as the change in the amount of force necessary to move the rear wheel vertically divided by the vertical distance the wheel has moved. The wheel rate can be calculated by dividing the spring rate by the motion ratio. Each of these terms can also apply similarly to an air spring in the front suspension assembly, but with respect to the front wheel instead of the rear wheel.

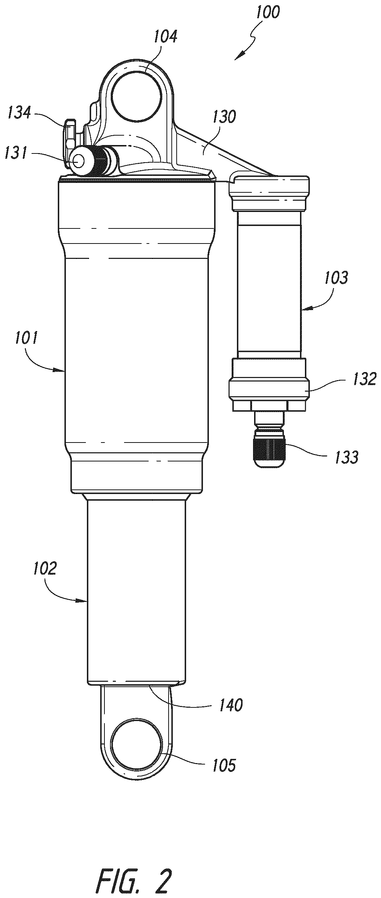

FIG. 2 illustrates a side view of one embodiment of an air spring 100. In some embodiments, the air spring 100 can include a first member 101 and a second member 102. In some embodiments, the first member 101 and second member 102 are substantially cylindrical in shape. The first member 101 can be slideably coupled to the second member 102. The first member 101 can be configured to slideably receive the second member 102. The air spring 100 can also include a first coupling portion, such as a first eyelet 104, and a second coupling portion, such as a second eyelet 105. The first eyelet 104 can be located at a top portion (or first end) of the air spring 100 and the second eyelet 105 can be located at a bottom portion (or second end) of the air spring 100. The first eyelet 104 and second eyelet 105 can each be configured to rotatably couple the air spring 100 to the bicycle frame 2 and the subframe 6. In some embodiments, a fastener can be passed through the first eyelet 104 or second eyelet 105 which also passed through a portion of the bicycle frame 2 or subframe 6, securing the air spring 100 to the bicycle frame 2 or subframe 6. In some embodiments, including the embodiment illustrated in FIG. 2, the first eyelet 104 can be affixed to the first member 101 such that the first eyelet 104 is constrained from moving relative to the first member 101 and the second eyelet 105 can be affixed to the second member 102 such that the second eyelet 105 is constrained from moving relative to the second member 102. The "length" of the air spring 100 is defined as the distance from the center of the first eyelet 104 to the center of the second eyelet 105. In some embodiments, the air spring 100 may not incorporate a first eyelet 104 and second eyelet 105, and in such embodiments, the "length" of the air spring is defined as the distance between the axis about which the air spring 100 rotatably couples to the bicycle frame 2 and the axis about which the air spring 100 rotatably couples to the bicycle subframe 6. In fork-style embodiments, such as the examples shown in FIGS. 13A-16C, the air spring may not be configured to rotatably couple to the bicycle frame. In those embodiments, the "length" can be defined as the distance between a surface at each end of the air spring (such as between surfaces 1304 and 1305 of FIGS. 13A, 14A, 15A, and 16A). For example, the length can be defined as the distance between a surface at each end of the air spring that is oriented at a generally perpendicular angle to a longitudinal axis of the air spring, such as a surface used in mounting the air spring to the bicycle frame. Surfaces 1304 and 1305 of FIGS. 13A, 14A, 15A, and 16A illustrate examples of such surfaces, but other surfaces may also be used. In some cases, comparisons of the length in extended and compressed positions can be considered in relative terms, with the length defined as the distance between any two surfaces that are fixed with respect to member 101 and 102, respectively.

In some embodiments, including the embodiment illustrated in FIG. 2, the air spring 100 can include an upper wall, such as a cap 130. The cap 130 can be configured to be affixed to a top portion of the first member 101. The cap 130 can seal the top portion of the first member 101. Methods of affixing the cap 130 to the first member 101 can include, for example, threading, bonding, adhesives, fasteners, etc. In some embodiments, the first eyelet 104 can be formed integrally into the cap 130. In other embodiments, the first eyelet 104 can be affixed to the cap 130. In some embodiments, the second member 102 can include a bottom wall 140 sealing the bottom portion of the second member 102. In some embodiments, the bottom wall 140 can formed integrally with the second member 102. In other embodiments, the second member 102 can include a first portion and a second portion, the bottom wall 140 forming part of the second portion. In some embodiments, the second eyelet 105 can be affixed to the bottom wall 140 of the second member 102. In some embodiments, the first member 101 and the third member 103 have separate caps, coupled together with a rigid or flexible connector.

In some embodiments, the air spring 100 can include a third member, such as third member 103 of FIG. 2. In some embodiments, the third member can mounted externally to the first member 101. In some embodiments, the third member can be substantially cylindrical in shape. The third member can be affixed to the cap 130. In some embodiments, a top portion of the third member can be affixed to the cap 130. In some embodiments, the third member may have another cap affixed to it, such as second cap 132 of FIG. 2.

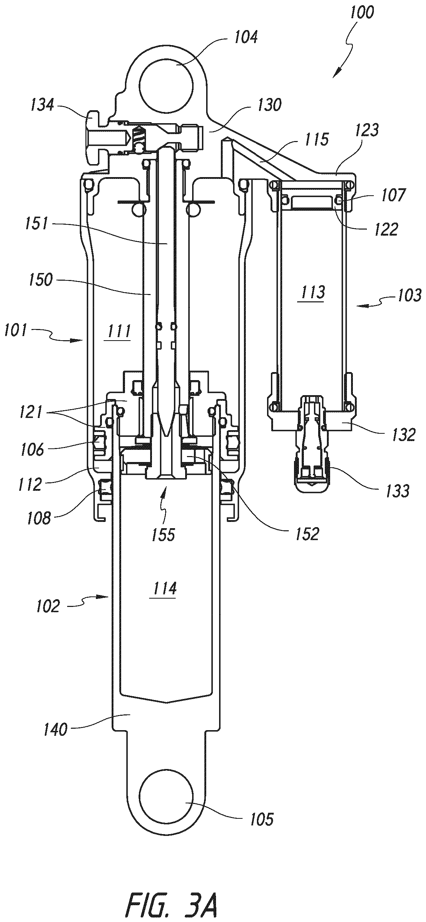

In some embodiments, including the embodiment illustrated in FIG. 2, the air spring 100 can include an external valve configured to allow an external pressure source to fluidly couple to at least one pressure chamber located within the air spring 100, and adjust the pressure within the pressure chamber. In some embodiments, the air spring 100 can include a plurality of external valves. In some embodiments the valves can be located in the cap 130 (such as valve 131). In some embodiments, the valves can be located in the second cap 132 (such as valve 133). In other embodiments, the valves can be located in other portions of the air spring 100 which may include, for example, the first member 101, second member 102, bottom wall 140, third member 103, etc. In some embodiments, the air spring 100 can include a damping assembly 155 (see FIG. 3A) configured to resist compression or extension of the air spring 100 as a function of the velocity of the first member 101 relative to the second member 102. The damping system can include a damping adjuster 134. The damping adjuster 134, as illustrated in FIG. 2, can be located external of the air spring 100. The damping adjuster 134 can be located on the cap 130 of the air spring 100. In other embodiments, the damping adjuster 134 can be located in other portions of the air spring 100 which may include, for example, the first member 101, second member 102, bottom wall 140, third member 103, etc. The damping system can include a plurality of damping adjusters.

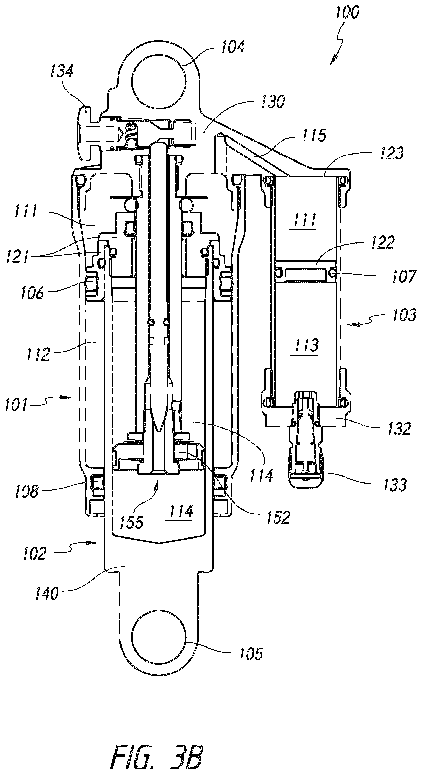

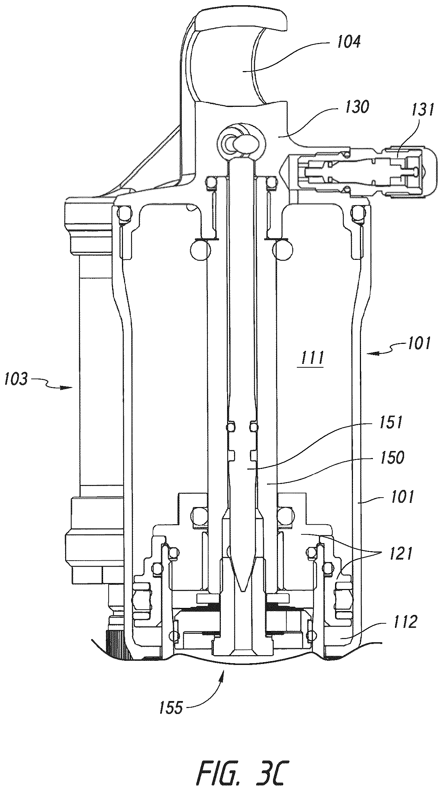

FIG. 3A illustrates a cross section view of the air spring 100 of FIG. 2 in a fully extended position. FIG. 3B illustrates a cross section view of the air spring 100 of FIG. 2 in a fully compressed position. FIG. 3C illustrates a partial cross section view of the air spring 100 of FIG. 2. In some embodiments, the air spring 100 can include a pressurized chamber within the air spring 100. A "pressurized chamber," as described herein, shall be defined as a portion of an air spring substantially sealed from other portions of the air spring by at least one piston, during at least a portion of the range of motion of the air spring. A pressurized chamber can be surrounded by one or more walls. In some embodiments, a pressurized chamber can be substituted with a different type of spring, which may include for example, a coil spring. A "piston," as described herein, shall be defined as a member configured to slide relative to a surrounding wall, typically a cylindrical wall, the member including a means for sealing against the surrounding wall such that the member forms an air tight seal between a first chamber on a first side of the piston and a second chamber on a second side of the piston, the first side being opposite the second side. In some embodiments, the air spring 100 can include a plurality of pressurized chambers. In some embodiments, the air spring 100 can include a piston. In some embodiments, the air spring 100 can include a plurality of pistons.

In some embodiments, including the embodiment illustrated in FIG. 3A, the second member 102 can be slideably received within the first member 101. In other embodiments, the first member 101 can be slideably received within the second member 102. The air spring 100 can be configured such that the second member 102 slides towards the first member 101, upwards when viewed from the perspective of FIG. 3A, when the air spring 100 is compressed, and away from the first member 101, downwards when viewed from the perspective of FIG. 3A, when the air spring 100 is extended. In some embodiments, the first eyelet 104 is furthest from the second eyelet 105 when the air spring 100 is in a fully extended position, as illustrated in FIG. 3A, and the first eyelet 104 is closest to the second eyelet 105 when the air spring 100 is in a fully compressed position, as illustrated in FIG. 3B. In some embodiments, including the embodiment illustrated in FIG. 3A, the first member 101 can include a sealing member 108 configured to seal the first member 101 to the second member 102 as the second member 102 slides relative to the first member 101.

In some embodiments, the air spring 100 can include a first piston 121. The first piston 121 can be affixed to the second member 102 of the of the air spring 100, such that when the second member 102 slides relative to the first member 101, the first piston 121 moves with the second member 102. The first piston 121 can be affixed to the top of the second member 102 (e.g., the end of the second member furthest from eyelet 105). The first piston 121 can be configured to slide within the first member 101 and seal against the first member 101. The first piston 121 can include a sealing member 106 configured to seal against the first member 101 of the air spring 100. In some embodiments, the first piston 121 can include a plurality of sealing members 106. In some embodiments, the first piston can 121 comprise more than one piece affixed to one another.

In some embodiments, including the embodiment illustrated in FIG. 3A, the air spring 100 can include a first pressurized chamber, such as a primary chamber 111. In some embodiments, the primary chamber 111 can be disposed within the first member 101 of the air spring 100. The primary chamber 111 can be pressurized with a gas, which may include for example, air. The first piston 121 can be adjacent the primary chamber 111. "Adjacent," when used herein to describe the relationship between a piston and a pressurized chamber, shall characterize an arrangement wherein one side of the piston is exposed to the pressurized gas within the pressurized chamber such that the pressure exerts a force against the one side of the piston. The first piston 121 can be disposed at a first end, such as the bottom end, of the primary chamber 111 (e.g., the end of the primary chamber 111 furthest from the eyelet 104). A piston being described herein as being disposed at one end of a pressurized chamber shall also characterize an arrangement wherein one side of the piston is exposed to the pressurized gas within the pressurized chamber such that the pressure exerts a force against the one side of the piston. The air spring 100 can be configured such that when air spring 100 is compressed, as illustrated in FIG. 3B, and the second member 102 slides towards the first member 101, the first piston 121 is configured to slide towards the primary chamber 111 and decrease the volume of the primary chamber 111. The primary chamber 111 can be pressurized such that the pressurized gas within the primary chamber 111 exerts a force on a first side, such as the top side as illustrated in FIG. 3A, of the first piston 121, forcing the first piston 121 and second member 102 away from the first member 101 and the air spring 100 towards a fully extended position. As the air spring 100 is compressed, the volume of the primary chamber 111 can decrease, increasing the pressure within the primary chamber 111, and increasing the force which the primary chamber 111 exerts on the first piston 121. In some embodiments, the primary chamber 111 can include a primary chamber valve 131, as illustrated in FIG. 3C, configured to allow an external pressure source to fluidly couple to the primary chamber 111 and adjust the pressure within the primary chamber 111. By adjusting the pressure within the primary chamber 111, the shape of the spring curve can be manipulated.

In some embodiments, including the embodiment illustrated in FIG. 3A, the air spring 100 can include a second pressurized chamber, such as a negative chamber (such as chamber 112).

In some embodiments, the air spring 100 can include a second piston (such as second piston 122) which can be configured to slide within the air spring 100. In some embodiments, a primary chamber extension portion 115 can be formed in the cap 130 of the air spring 100. In some embodiments, a retaining portion 123 can be included at an end of the extension portion 115, and the retaining portion 123 can be configured to limit displacement of the second piston 122 toward the extension portion 115. In some embodiments, the second piston 122 can be adjacent to (or positioned between) both the primary chamber 111 and an additional chamber, such as compensation chamber 113. In some embodiments, the piston 122 may include a seal 107, such as an O-ring, that seals against the interior wall of third member 103. In some embodiments, the second piston 122 and compensation chamber 113 can be beneficial, such as to help to dampen undesirable variations in the air spring's spring rate caused by an adiabatic effect.

In some embodiments, including the embodiment illustrated in FIG. 3A, the air spring 100 can include a damping assembly 155. The damping assembly 155 can include a damping fixation shaft 150. The damping fixation shaft 150 can be disposed within the first member 101 of the air spring 100. The air spring can also include a chamber 114 in fluid communication with the damping assembly 155, such that a fluid within the chamber 114 can be used to damp motion of the second member 102 with respect to the first member 101. The damping assembly 155 can further include a damping adjustment rod 151 that adjusts damping member 152, which may include valves, shims, and/or the like. The position of the damping adjustment rod 151 may be controlled by, for example, the damping adjuster 134.

In some embodiments, the amount of extension force each spring exerts, as a function of displacement, the distance each spring has been compressed, can be represented by a spring curve. The instantaneous slope of the spring curve represents the spring rate of that spring at that particular displacement. The spring curve can be separated into three portions, an "initial zone" comprising the first 30% of displacement, the "bump zone" comprising the middle 30% to 70% of displacement, and an "ending zone" comprising the final 70% to 100% of displacement. The spring curve of a standard coil spring curve is typically linear, which can be a desirable characteristic, throughout the initial zone, bump zone, and ending zone. The pressurized negative chamber 112 of the air spring 100 can be configured to produce a lower spring rate at the beginning of the spring curve in the initial zone. In the bump zone, the negative chamber can be configured to no longer substantially affect the spring curve. In the bump zone, the primary chamber 111 and compensation chamber 113 can work together to closely follow the desired bump zone curve of a standard coil spring. In the ending zone, the spring rate can increase providing additional resistance to bottoming out the air spring 100 during large impacts. The compensation chamber 113 allows the ending zone of the air spring 100 curve to be adjusted without substantially affecting the shape of the curve in the bump zone.

In some embodiments, the shape of the spring curve of the air spring 100 can be manipulated by adjusting the pressure in one or more of the pressurized chambers via one of the chamber valves. The shape of the entire curve, and particularly the slope of the curve within the bump zone, can be adjusted by adjusting the pressure within the primary chamber 111 of the air spring 100. Increasing the pressure in the primary chamber 111 can increase the spring rate and the slope of the spring curve. Lowering the pressure in the primary chamber 111 can decrease the spring rate and the slope of the spring curve. The shape of the curve in the initial zone, and particularly the portion nearest the fully extended position, can be manipulated by adjusting the pressure in the negative chamber 112. Increasing the pressure in the negative chamber 112 can reduce the amount of force necessary to move the air spring 100 from a fully extended position. Decreasing the pressure in the negative chamber 112 can reduce that effect. The shape of the curve in the ending zone, and depending on the pressures of the configuration and pressures of the primary chamber 111 and compensation chamber 113, possibly also the bump zone, can be manipulated by adjusting the pressure in the compensation chamber 113. Increasing the pressure in the compensation chamber 113 can shift the displacement at which the second piston 122 moves from the retained position (e.g., the position shown in FIG. 3A), and thus softens the spring rate of the air spring 100, closer to the fully extended position. Increasing the pressure in the compensation chamber 113 can reduce the effect of the compensation chamber 113. Decreasing the pressure in the compensation chamber 113 can shift the displacement at which the second piston 122 moves from the retained position, and thus softens the spring rate of the air spring 100, closer to the fully compressed position. In some embodiments, the pressures of the various air chambers can each be adjusted independently to manipulate a particular portion of the spring curve.

In some embodiments, the air spring 100 can be configured to provide the desired wheel rate, when installed in a bicycle 10 with a particular motion ratio. In some embodiments, the air spring 100 can be configured to be installed in a bicycle 10 with a motion ratio greater than 1. In some embodiments, the air spring 100 can be configured to be installed in a bicycle 10 with a motion ratio greater than 1.25. In some embodiments, the air spring 100 can be configured to be installed in a bicycle 10 with a motion ratio greater than 1.5. In some embodiments, the air spring 100 can be configured to be installed in a bicycle 10 with a motion ratio greater than 1.75. In some embodiments, the air spring 100 can be configured to be installed in a bicycle 10 with a motion ratio greater than 2. In some embodiments, the air spring 100 can be configured to be installed in a bicycle 10 with a motion ratio greater than 2.25. In some embodiments, the air spring 100 can be configured to be installed in a bicycle 10 with a motion ratio greater than 2.5. In some embodiments, the air spring 100 can be configured to be installed in a bicycle 10 with a motion ratio greater than 2.75. In some embodiments, the air spring 100 can be configured to be installed in a bicycle 10 with a motion ratio greater than 3. In some embodiments, the air spring 100 can be configured to be installed in a bicycle 10 with a motion ratio between 1 and 3. In some embodiments, the air spring 100 can be configured to be installed in a bicycle 10 with a motion ratio between 1.5 and 3. In some embodiments, the air spring 100 can be configured to be installed in a bicycle 10 with a motion ratio between 1.75 and 3. In some embodiments, the air spring 100 can be configured to be installed in a bicycle 10 with a motion ratio between 2 and 3. In some embodiments, the air spring 100 can be configured to be installed in a bicycle 10 with a motion ratio between 2.25 and 3. In some embodiments, the air spring 100 can be configured to be installed in a bicycle 10 with a motion ratio between 2.25 and 2.75. In some embodiments, the air spring 100 can be configured to be installed in a bicycle 10 with a motion ratio between 2.25 and 2.5.

In some embodiments, the air spring 100 can be configured to provide a desired spring rate. In some embodiments, the air spring 100 can be configured to provide a desired average spring rate over a particular portion of the curve. In some embodiments, the air spring 100 can be configured to provide a desired average spring rate in the bump zone of the spring curve. In some embodiments, the air spring 100 can be configured to provide an average spring rate greater than 2 pounds/millimeter (lbs./mm) in the bump zone of the spring curve. In some embodiments, the air spring 100 can be configured to provide an average spring rate greater than 4 pounds/millimeter (lbs./mm) in the bump zone of the spring curve. In some embodiments, the air spring 100 can be configured to provide an average spring rate greater than 6 pounds/millimeter (lbs./mm) in the bump zone of the spring curve. In some embodiments, the air spring 100 can be configured to provide an average spring rate greater than 8 lbs./mm in the bump zone of the spring curve. In some embodiments, the air spring 100 can be configured to provide an average spring rate greater than 10 lbs./mm in the bump zone of the spring curve. In some embodiments, the air spring 100 can be configured to provide an average spring rate greater than 12 lbs./mm in the bump zone of the spring curve. In some embodiments, the air spring 100 can be configured to provide an average spring rate greater than 14 lbs./mm in the bump zone of the spring curve. In some embodiments, the air spring 100 can be configured to provide an average spring rate greater than 16 lbs./mm in the bump zone of the spring curve. In some embodiments, the air spring 100 can be configured to provide an average spring rate greater than 18 lbs./mm in the bump zone of the spring curve. In some embodiments, the air spring 100 can be configured to provide an average spring rate greater than 20 lbs./mm in the bump zone of the spring curve. In some embodiments, the air spring 100 can be configured to provide an average spring rate greater than 22 lbs./mm in the bump zone of the spring curve. In some embodiments, the air spring 100 can be configured to provide an average spring rate greater than 24 lbs./mm in the bump zone of the spring curve. In some embodiments, the air spring 100 can be configured to provide an average spring rate greater than 26 lbs./mm in the bump zone of the spring curve. In some embodiments, the air spring 100 can be configured to provide an average spring rate greater than 28 lbs./mm in the bump zone of the spring curve. In some embodiments, the air spring 100 can be configured to provide an average spring rate greater than 30 lbs./mm in the bump zone of the spring curve.

In some embodiments, the air spring 100 can be configured to provide an average spring rate between 2 lbs./mm and 30 lbs./mm in the bump zone of the spring curve. In some embodiments, the air spring 100 can be configured to provide an average spring rate between 4 lbs./mm and 28 lbs./mm in the bump zone of the spring curve. In some embodiments, the air spring 100 can be configured to provide an average spring rate between 6 lbs./mm and 26 lbs./mm in the bump zone of the spring curve. In some embodiments, the air spring 100 can be configured to provide an average spring rate between 8 lbs./mm and 24 lbs./mm in the bump zone of the spring curve. In some embodiments, the air spring 100 can be configured to provide an average spring rate between 10 lbs./mm and 22 lbs./mm in the bump zone of the spring curve. In some embodiments, the air spring 100 can be configured to provide an average spring rate between 12 lbs./mm and 20 lbs./mm in the bump zone of the spring curve. In some embodiments, the air spring 100 can be configured to provide an average spring rate between 14 lbs./mm and 18 lbs./mm in the bump zone of the spring curve.

The air spring 100 shown in FIGS. 2 and 3A-3C can be modified to include any of the concepts disclosed herein, including the concepts discussed below with reference to air springs that are able to seal one chamber off from another chamber when the air spring is at a certain level of compression. Further, any of the other air springs disclosed herein can be modified to include any of the features of the air spring 100 shown in FIGS. 2 and 3A-3C. Following is a description of some benefits that can be provided by any of the air springs disclosed herein, including variations in performance parameters that can be achieved.

In one aspect, the bicycle fork or shock absorber moves 5%-15% of its overall travel in response to small events, 15%-50% of its overall travel in response to medium events and 50-85% in response to large events.

Advantageously, in one aspect the resistance force (desirably the air resistance force) to bottom out is at least 2500 N (Newtons), at least 2600 N, at least 2700 N, at least 2800 N, at least 2900 N, at least 3000 N, at least 3500 N, at least 4000 N, at least 4500 N, at least 5000 N, at least 5500 N (Newtons), at least 5600 N, at least 5700 N, at least 5800 N, at least 5900 N, at least 6000 N, at least 6100 N or at least 6200 N at the fully-compressed position or 100% of travel. In some aspects, the resistance force (desirably the air resistance force) to bottom out is at least 5500 N (Newtons), at least 5600 N, at least 5700 N, at least 5800 N, at least 5900 N, at least 6000 N, at least 6100 N or at least 6200 N at 98% of travel. In one aspect, the resistance to bottom out of a front fork is less than the resistance force to bottom out of a rear shock. In one aspect, the resistance force to bottom out is at least 200 lbs. (pounds), at least 220 lbs., at least 240 lbs., at least 260 lbs., at least 280 lbs. or at least 300 lbs. at 70%, 75%, 80%, 85% or 90% of travel. For example, the amount of travel graphed in FIG. 7 (described below) is 50 mm (millimeters) and 90% of travel corresponds to 45 mm of travel (the first vertical line spaced inward from the right side of the graph).

In another aspect, the slope of the spring curve is less than 500 lbs. per inch of travel, less than 475 lbs. per inch of travel, less than 450 per inch of travel, less than 425 lbs. per inch of travel or less than 400 lbs. per inch of travel at 5/8 of the total travel distance, ¾ of the total travel distance, 13/16 of total travel distance or 7/8 of total travel (moving from fully extended to fully compressed).

In another aspect, variation in the slope of the spring curve in the bump zone is not more than 5%, no more than 10%, no more than 15%, no more than 20% or no more than 25%. In another aspect, variation in the slope of the spring curve from 10% to 90% of travel or 15% to 80% of travel is not more than 5%, no more than 10%, no more than 15%, no more than 20% or no more than 25%. In another aspect, variation in the slope of the spring curve in the bottom out zone is at least 50%, is at least 60%, is at least 70%, is at least 80%, is at least 90%, is at least 100%, is at least 125%, is at least 150%, is at least 175% or is at least 200%. In another aspect, the variation in the slope of the spring curve in the bump zone and the variation in the slope of the spring curve in the bottom out zone is some combination of the foregoing variations.

As used herein a "shorter travel bicycle" is a bicycle with less than 100 mm of travel of the front and rear shock absorber and a "longer travel bicycle" is a bicycle with greater than 150 mm of travel of the front and rear shock absorber. In some embodiments, the shorter travel bicycle can have a spring curve with a more linear slope in both the initial zone and the bump zone or 0%-70% of travel or 5%-70% of travel. For example, in some embodiments a shorter travel bicycle can have a spring curve with a variation in the slope of the spring curve during 0%-70% or 5%-70% of travel of no more than 5%, no more than 10%, no more than 15%, no more than 20%, no more than 25%, no more than 30%, no more than 35%, no more than 40%, no more than 45% or no more than 50%. In some embodiments, the longer travel bicycle can have a more linear spring curve in the bump zone and the majority of the ending zone. For example, a longer travel bicycle can have a spring curve with a variation in the slope of the spring curve during 30%-90% or 30%-95% of travel of no more than 5%, no more than 10%, no more than 15%, no more than 20%, no more than 25% no more than 30%, no more than 35%, no more than 40%, no more than 45% or no more than 50%.

As has been mentioned, a shock absorber can have various adjustment mechanisms to change or set certain characteristics of the shock absorber and how it responds under certain situations. One of these adjustments can include sag.

Sag refers to how much the suspension moves under the static load or body weight of the rider on the bicycle. The preload of a shock absorber can generally be adjusted so that the desired sag is achieved. Preload refers to the force applied to the spring before external loads, such as rider weight, are applied. More preload makes the suspension sag less, and less preload makes the suspension sag more. Adjusting preload affects the ride height of the suspension.

It can be desired to have a certain sag percentage when the rider sits on the bike. Common values for the sag percentage are about 20-35%, it can also be between about 5-45%, depending on the terrain, type of riding and amount of travel of the suspension, among other factors.

### Example Air Spring with Second Chamber Sealable from First Chamber

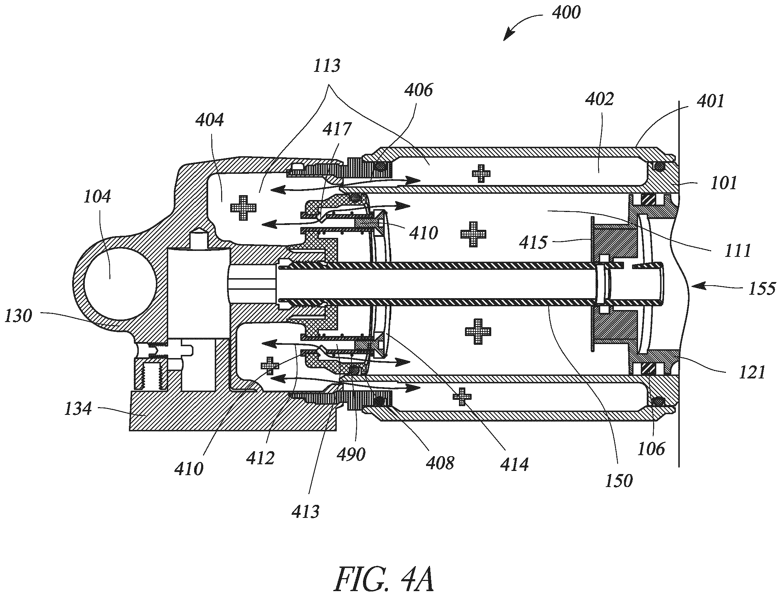

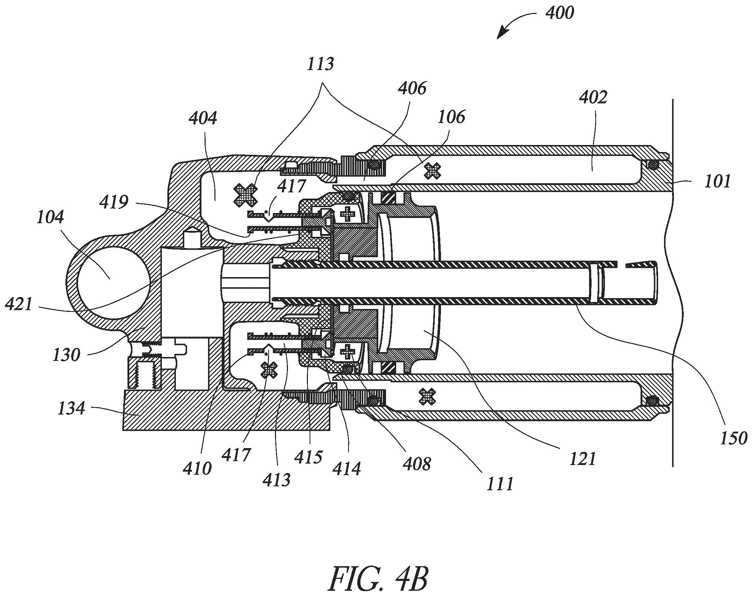

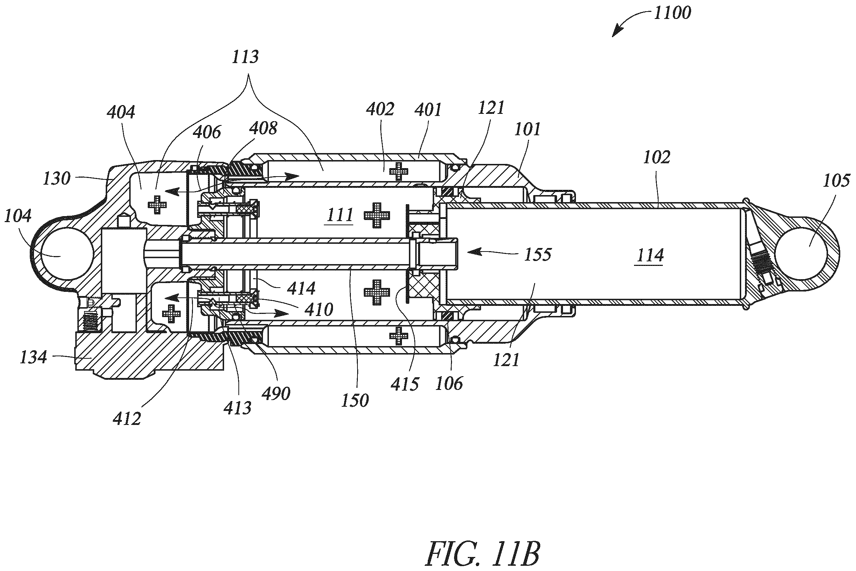

FIGS. 4A and 4B illustrate partial cross section views of an embodiment of an air spring 400 that includes first and second air chambers that may be selectively sealed off from one another, such as to reduce the operational volume of the air spring and thus increase the slope of the compression ratio or spring rate curve. In this and various other embodiments disclosed herein, the first and second chambers may be automatically sealed off from one another, such as based on a relative position of a first member or body of the air spring (such as first body or member 101) with respect to a second member or body of the air spring (such as a body or member similar to second member 102 of FIG. 3A, which is not shown in FIGS. 4A and 4B, but may be attached to piston 121, as shown in the embodiment of FIG. 11B). The air spring 400 includes various components and features similar to the embodiments described above, and the same or similar reference numbers are used to refer to the same or similar components. For efficiency, the descriptions of this embodiment and the following embodiments focus on features that may be different from the air spring 100 described above. Any features of the air spring 100 described above that are not explicitly described with reference to this embodiment and the following embodiments may be incorporated into this and the following embodiments. This embodiment and various other embodiments disclosed herein can be tuned (such as by adjusting the pressure of a pressurized gas within one or more chambers) to achieve the various benefits described above.

The air spring 400 comprises a first body or member 101 and a first piston 121 configured to slide or translate within the first body 101. The first piston 121 may have a second body or member coupled thereto, similar to the second member 102 of FIG. 3A (not shown in FIG. 4A, but shown in the embodiment of FIG. 11B). Also similar to the embodiment of FIG. 3A, the air spring 400 comprises a shaft 150 that may seal against the first piston 121 and may, for example, support a portion of a damping system (not shown in these figures but may be similar to the damping components described above, such as the damping assembly 155 of FIG. 3A).

The air spring 400 comprises a first or primary chamber 111 defined by a cylindrical wall of the first body 101. The air spring 400 further comprises a second chamber 113 configured to be fluidly coupled with the first chamber 111 via flow paths 412 that pass through passages 413 of plungers 410. This embodiment includestwo stops, such as the illustrated plungers 410, but other embodiments may have a non-plunger configuration and/or include more or fewer stops/plungers. Further, this embodiment may include more than two plungers 410, such as a plunger not visible because it is behind the shaft 150 and another plunger that is not visible because it is in the portion of the device on the other side of the cross section plane. The plungers not visible in this view may function the same or similarly to the plungers 410 that are visible in this view and may comprise the same or similar structure as the plungers 410 that are visible in this view. Accordingly, a cross-sectional view taken through a plane that passes through other plungers may show the plungers similarly to how the plungers 410 are shown in FIG. 4A. In some embodiments, the plungers 410 may be referred to as pistons.

In this embodiment, the second chamber 113 is separated into a first portion 402 and a second portion 404, which are fluidly coupled through flow paths 406 (two of which are shown, but more or fewer may be used). The first portion 402 of the second chamber 113 is desirably configured as an annular chamber that surrounds or substantially surrounds the first chamber 111. For example, the first portion 402 of the second chamber 113 may be formed as an annular or doughnut-shaped chamber positioned between an outer cylindrical surface of the body 101 and an inner cylindrical surface of a second body or member 401. The second portion 404 of the second chamber 113 in this embodiment is desirably formed by a cavity in the cap 130.

The plungers 410 are slidably coupled to a partition 408 that separates the first chamber 111 from the second chamber 113. The plungers 410 are coupled together at their proximal ends by an annular plate 414. In operation, when the air spring 400 is compressed, the first piston 121 will move toward the plate 414, thus compressing the air or other gas present within the first and second chambers 111, 113. When the first piston 121 reaches a certain amount of compression that is nearing the end of stroke of the air spring 400, a distal surface or face 415 of the first piston 121 desirably contacts the plate 414 (and/or the proximal ends of the plungers 410) and causes the plate and plungers 410 to translate axially (e.g., to translate toward the cap 130 or toward the left side of the page as oriented in FIG. 4A). This can enable the plungers 410 to move from an open position or configuration to a closed position or configuration. FIG. 4A shows the plungers 410 in the open position, and FIG. 4B shows the plungers 410 in the closed position.

With continued reference to FIGS. 4A and 4B, when the plungers 410 are in the open position (FIG. 4A) the first and second chambers 111, 113 can fluidly communicate through flow paths 412, and thus the air or gas present within first and second chambers 111, 113 will desirably compress at an equal or substantially equal rate. When the piston 121 nears the end of stroke and contacts the plungers 410 and/or the plate 414, the plungers 410 will start to translate with respect to the partition 408. When the plungers 410 move or translate sufficiently with respect to the partition 408, an opening 417 in the side wall of the plunger 410 (e.g., an opening 417 into passage 413 that flow path 412 passes through) will be desirably moved far enough that the flow path 412 is no longer open, thus sealing the second chamber 113 off from the first chamber 111. This desirably causes an abrupt reduction in the operational volume of the air spring, because further movement of the first piston 121 in the compression direction will result only in compressing the air or gas present in the first chamber 111 and not the second chamber 113. As can be seen in FIG. 4B, once the piston 121 nears the end of its stroke, the remaining volume of first chamber 111 is relatively small. This is indicated by the two plus sign graphics that show the remaining portion of the pressurized first chamber 111, which is sealed off from the first and second portions 402, 404 of the second chamber 113, as indicated by the four X graphics. Such a configuration will desirably generate a relatively high force to prevent or reduce the chance of a harsh mechanical bottoming out.

When the air spring 400 rebounds (e.g., the first piston 121 moves back from the compressed position of FIG. 4B to the extended position of FIG. 4A, the plungers 410 and plate 414 will desirably also move toward the extend direction, thus reopening the flow paths 412. In some embodiments, a spring 490 is positioned around the plunger 410 and positioned to apply a force between the head of the plunger and the partition 408. This force desirably forces the plungers 410 back to the open configuration of FIG. 4A. In some embodiments, a distal end of the plungers 410 comprises a flange 419 that engages a distal surface 421 of the partition 408 to stop or limit extension movement at the end of extension of the plungers 410.

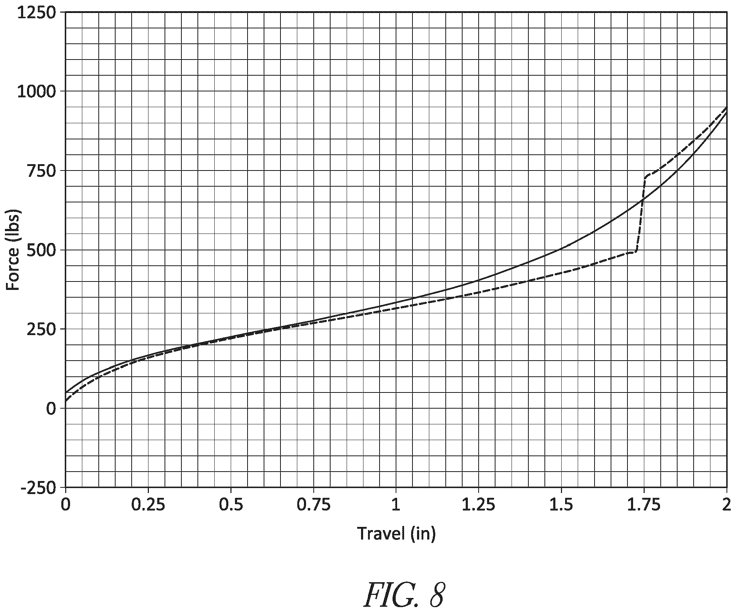

FIG. 8 is a chart showing a comparison of a normal stock air spring compression ratio curve (the solid line) and a theoretical compression ratio curve of the air spring 400 of FIGS. 4A and 4B (the dashed line). As can be seen, a steep jump in force occurs near the end of the stroke, corresponding to when the plungers 410 seal off the second chamber 113 from the first chamber 111.

In some embodiments, including the illustrated embodiment, the volume of the first chamber and the second chamber together is about 1.5 times the volume of the first chamber alone.

In some embodiments, the air spring rate is about 11 pounds/mm, but the illustrated embodiment has an air spring rate of 9 pounds/mm.

As used herein, when one chamber is described as being in fluid communication with another chamber with an air spring in a first configuration (such as an extended configuration), and the chambers are described as being sealed off from one another with the air spring in a second configuration (such as a compressed configuration), the sealing may refer to an airtight seal, or the sealing may refer to a seal that is not necessarily completely airtight, but that at least introduces a substantial damping effect between the two chambers (such as, for example, at least a 75%, 85%, or 95% increase in damping between the two chambers). For example, in the air spring 400, if an elastomer seal, such as an O-ring or similar, is used between the plungers 410 and the partition 408, then an airtight seal may be formed between chambers 111 and 113 when the piston 121 is in the compressed position. On the other hand, if such a seal is not used between the plungers 410 and the partition 408, or a bushing that has at least some radial clearance with the plunger 410 and/or the partition 408 is used, then the sealing off of chamber 111 from 113 might not necessarily be airtight, but a relatively small radial clearance may introduce a significant enough damping effect that flow is still prevented or substantially prevented, and the same or similar benefits as if an airtight seal were made will be obtained, particularly if the piston 121 is being compressed at a relatively high rate of speed (such as, for example, at a rate of approximately 4.0 m/s). Similar reasoning can apply to other embodiments shown in the figures and described below.

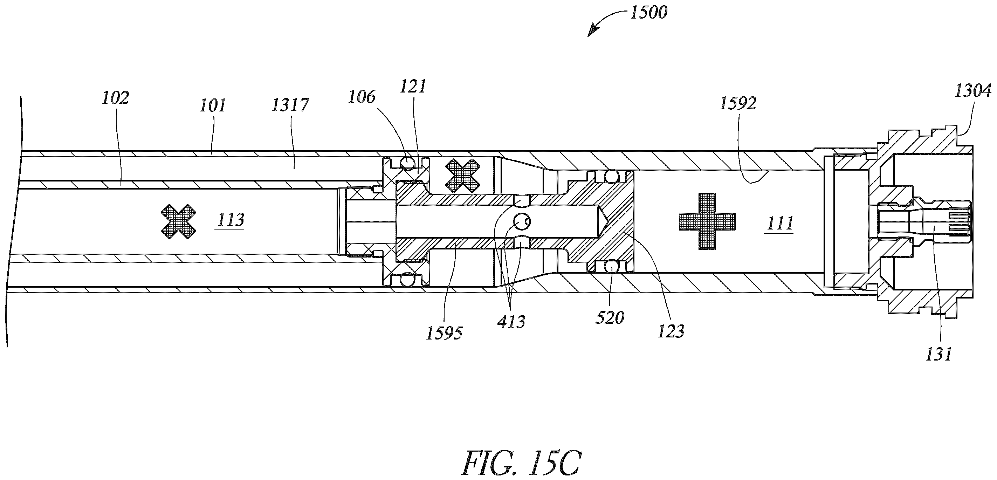

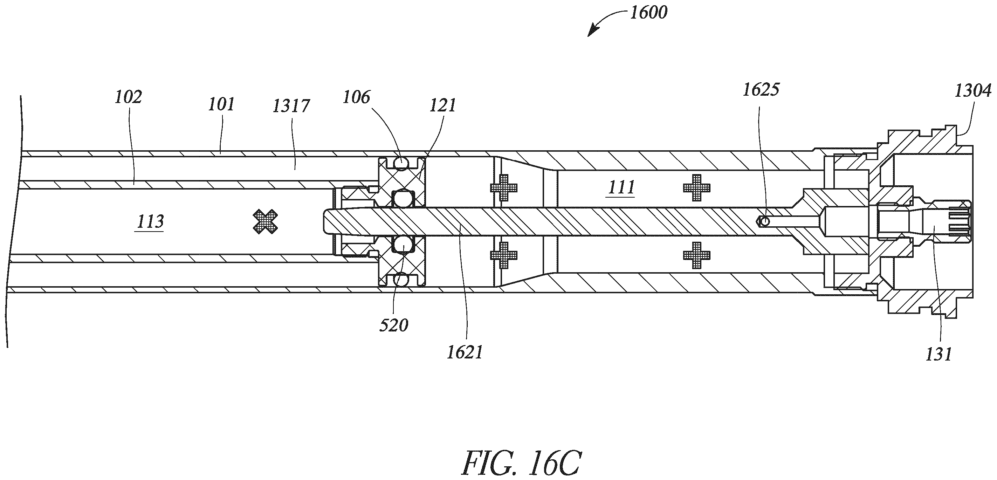

For example, in an embodiment such as is shown in FIGS. 4A or 11B, even when the flow paths 412 are open (as is shown in FIG. 4A and 1 1B), the passages those flow paths pass through may introduce at least some level of damping, even if the amount of damping is relatively negligible at the speeds the piston 121 is intended to move at. When the flow paths 412 are closed (as is shown in FIG. 4B), on the other hand, if there is radial clearance between the plungers 410 and the partition 408 (and there is no air tight seal, such as an elastomer seal), then at least some gas may theoretically be able to flow between the plungers 410 and partition 408. Such flow may be subject to a substantially higher damping effect, however, such as at least a 75%, 85%, or 95% increase in damping as compared to the flow paths 412 when the flow paths 412 are open. Similar increases in damping can occur for other embodiments disclosed herein, such as, for example, the various embodiments that utilize a bushing to close off a flow path (such as air springs 500, 900, 1200, 1300, and 1400, discussed below). Some embodiments, such as the air springs 1500 and 1600 discussed below, may comprise an elastomer seal that desirably closes off the flow paths in a substantially air tight matter (see, for example, seals 520 of FIG. 15C and 16C), instead of just substantially increasing a level of damping. It should be noted that any of the designs disclosed herein as using a bushing could alternative or additionally use a seal (such as an elastomer seal), and any of the designs disclosed herein as using a seal could alternative or additionally use a bushing.

As used herein, the terms airtight or air tight are intended to refer to a seal that does not let a gas (such as air or nitrogen) pass therethrough when the gas is pressurized at levels expected to be experienced within a chamber of the air spring. For example, such a seal may be desirably airtight at a pressure level of at least 250 psi, at least 500 psi, at least 750 psi, or at least 1000 psi. Further, as used herein, when a seal is described as preventing flow, the term "prevent" does not necessarily require that the seal be airtight. For example, as described above, some embodiments may be able to allow at least some relatively small amount of flow even when the flow path is closed and the seal is preventing flow through the closed flow path. Such flow may sometimes be referred to as "bleed flow" and, preferably, is limited to a relatively small flow rate. Some amount of bleed flow may be intentionally permitted, or may result from normal manufacturing variations and/or tolerances. Further, such bleed flow may be at least partially a function of speed. For example, if the piston is held stationary in the closed configuration, more bleed flow may be able to occur than if the piston is moving at a relatively high rate of speed in the closed configuration, such as at approximately 4.0 m/s. In some embodiments, when the piston is moving at a rate of 4.0 m/s, and the flow paths are in the closed configuration, the bleed flow is no more than 5%, 10%, 20%, 30%, 40%, 50%, 60%, or 75% of the bleed flow when the piston is moving at a slower r4ate of 0.5 m/s with the flow paths in the closed configuration.

### Additional Example Air Spring with Second Chamber Sealable from First Chamber

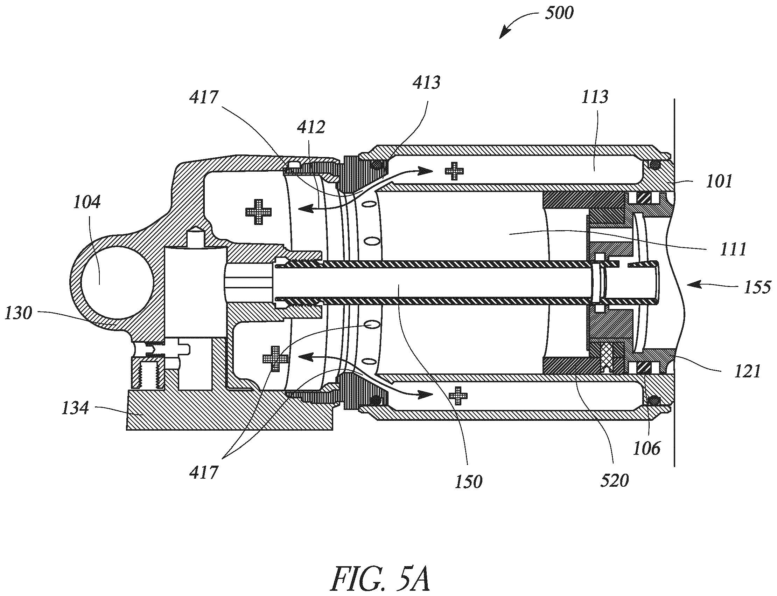

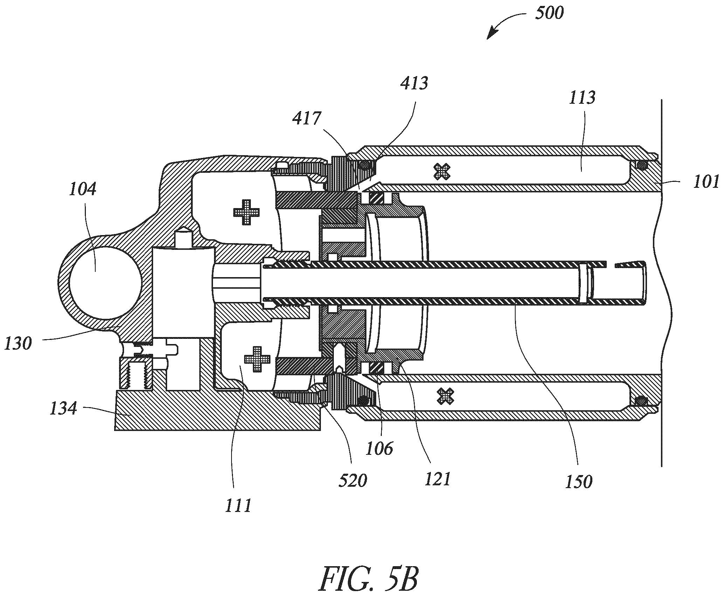

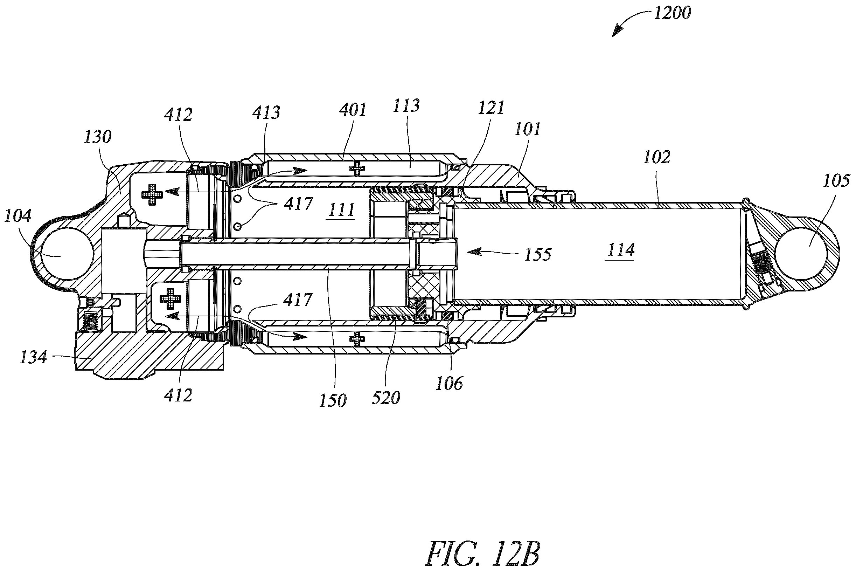

FIGS. 5A and 5B illustrate another embodiment of an air spring 500 that can selectively and/or automatically seal a first chamber from a second chamber during compression of the air spring. As with the embodiment of FIGS. 4A and 4B, FIG. 5A illustrates the air spring in an open configuration that allows fluid communication between the first and second chambers 111, 113, and FIG. 5B illustrates the air spring in a closed configuration that does not allow fluid communication between the first and second chambers 111, 113. Also, as with the embodiment of FIGS. 4A and 4B, a body or member similar to second member 102 of FIG. 3A is not shown attached to piston 121, but such a body could be included (similar to as shown in FIG. 12B).

With reference to FIG. 5A, the air spring 500 comprises a first or primary chamber 111 that, in this embodiment, is defined partially by an interior cylindrical surface of the first body or member 101, and is also defined partially by an internal cavity of the cap 130. In the configuration shown in FIG. 5A, the first or primary chamber 111 is in fluid communication with the second chamber 113 through openings 417 into fluid passages 413 in the first body 101.

One difference in the air spring 500 from the air spring 400 is that the first chamber 111 is sealed off from the second chamber 113 in a different fashion. Specifically, the air spring 500 comprises an annular bushing 520 coupled to the first piston 121. The bushing 520 is configured such that, when the first piston 121 nears the end of its compression stroke, an outer surface of the bushing 520 will seal off the passages 413. FIG. 5B illustrates the end of stroke of the first piston 121, with the bushing 520 sealing off the first chamber 111 from the second chamber 113. Similar to the air spring 400, the passages 413 will be first sealed off when the distal or forward end of the bushing 520 has completely covered the openings 417 into the passages 413, and the passages 413 will continue to be sealed off as the bushing 520 translates further. In the fully compressed position (shown in FIG. 5B), the bushing 520 may be moved somewhat beyond the edge of the openings 417). However, the sealing member 106 of the first piston 121 will still desirably keep the first and second chambers 111, 113 sealed off from one another. When the air spring 500 rebounds, meaning the piston 121 and bushing 520 move in the extend direction (to the right as oriented in FIG. 5B), the bushing 520 will eventually no longer be covering the openings into the passages 413, and the first and second chambers 111 and 113 will again be fluidly coupled.

One advantage of the air spring 500 as compared to the air spring 400 is that there are less components used to seal the second chamber 113 from the first chamber 111, which can lead to less weight, more efficient manufacturing, and/or the like. A notable difference between the air springs 400 and 500 is that, in the air spring 400, the air chamber defined by the cap 130 is part of the second chamber 113, and thus can be sealed off from the first chamber 111. In the air spring 500, however, the air chamber defined by the cap 130 is part of the first chamber 111, and thus is not sealed off from the first chamber. Various changes to the designs may be made and, depending on the application, it may be desirable for the portion of the chamber defined by the cap 130 to be part of the first chamber 111 or the second chamber 113.

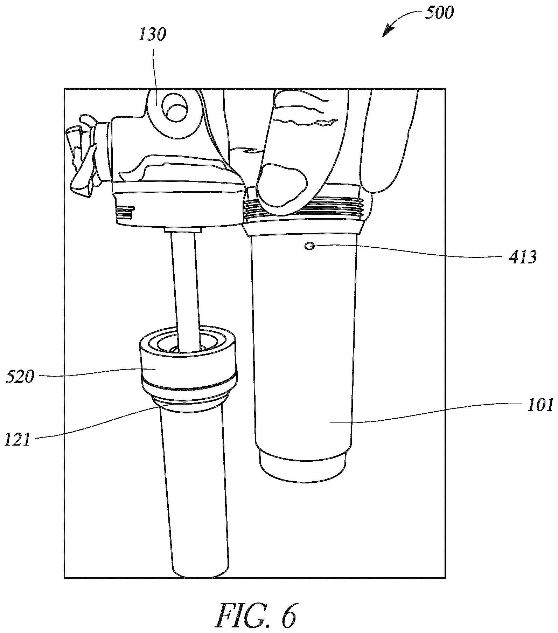

FIG. 6 illustrates an exploded view of a prototype of the air spring 500. FIG. 7 illustrates a chart providing air spring compression ratios generated using the prototype air spring 500 of FIG. 6. The dashed lines illustrate the performance of the prototype air spring 500, while the solid lines illustrate the performance of a stock air spring that does not include the features of the air spring 500 (e.g., that does not include the ability to cut off a gas chamber when nearing full compression). Similar to the chart in FIG. 8, a jump or quick increase in force can be seen near the end of the stroke, although the jump shown in FIG. 7 is not as large as the jump shown in FIG. 8, since, as discussed above, the air spring 500 includes the chamber of the cap 130 as part of the first chamber 111 instead of as part of the second chamber 113, and thus does not seal off the chamber in the cap 130.

In one aspect, variation in the slope of the spring curve in the bump zone is not more than 5%, no more than 10%, no more than 15%, no more than 20% or no more than 25%. In another aspect, variation in the slope of the spring curve in the bump zone is between 0% and 25%, 5% and 25%, 5% and 20%, 10% and 20% or 15% and 25%. In another aspect, variation in the slope of the spring curve in the bottom out zone is at least 50%, is at least 60%, is at least 70%, is at least 80%, is at least 90%, is at least 100%, is at least 125%, is at least 150%, is at least 175% or is at least 200%. In another aspect, variation in the slope of the spring curve in the bottom out zone is between 50% and 500%, between 75% and 300%, between 100% and 300% or between 150% and 250%. In another aspect, the variation in the slope of the spring curve in the bump zone and the variation in the slope of the spring curve in the bottom out zone is some combination of the foregoing variations. For example, (1) the variation in the slope of the spring curve in the bump zone is not more than 5% and (2) the variation of the slope of the spring curve in the bottom out zone is at least 50%, is at least 60%, is at least 70%, is at least 80%, is at least 90%, is at least 100%, is at least 125%, is at least 150%, is at least 175% or is at least 200%.

### Additional Example Air Springs with Two or More Chambers Sealable from First Chamber

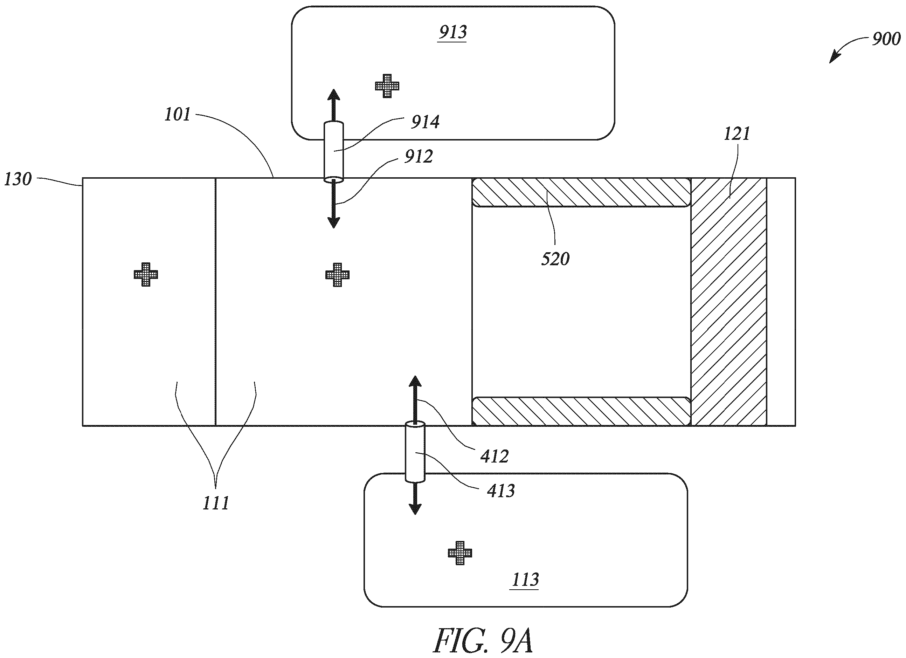

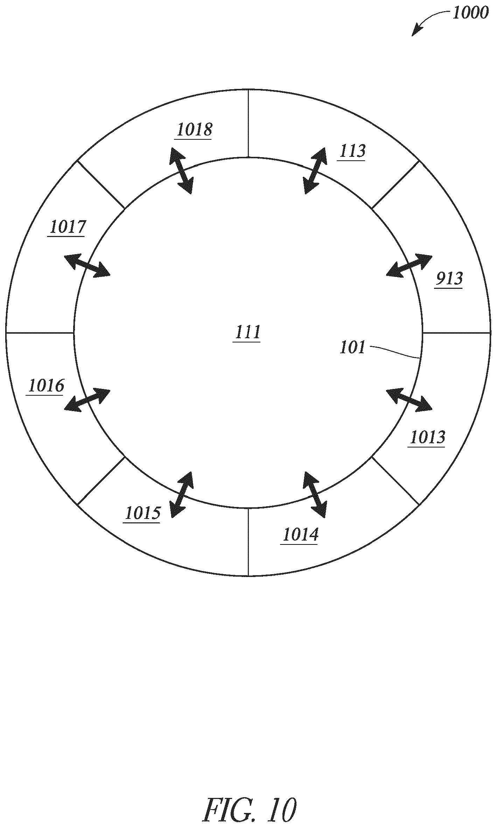

FIGS. 9A-9C illustrate schematically another embodiment of an air spring 900 that is similar in many respects to the air spring 500 of FIGS. 5A and 5B, and the same or similar reference numbers are used to refer to the same or similar components. The air spring 900 is shown schematically, and not all components of the air spring 900 are shown in the figures. Any of the components of the air spring 500 of FIGS. 5A and 5B may be included in the air spring 900, however, such as the shaft 150 and any other features of the air spring 500. Further, the air spring 500 of FIGS. 5A and 5B may be modified to incorporate the concepts described below with reference to the schematic diagrams of FIGS. 9A-9C and 10.

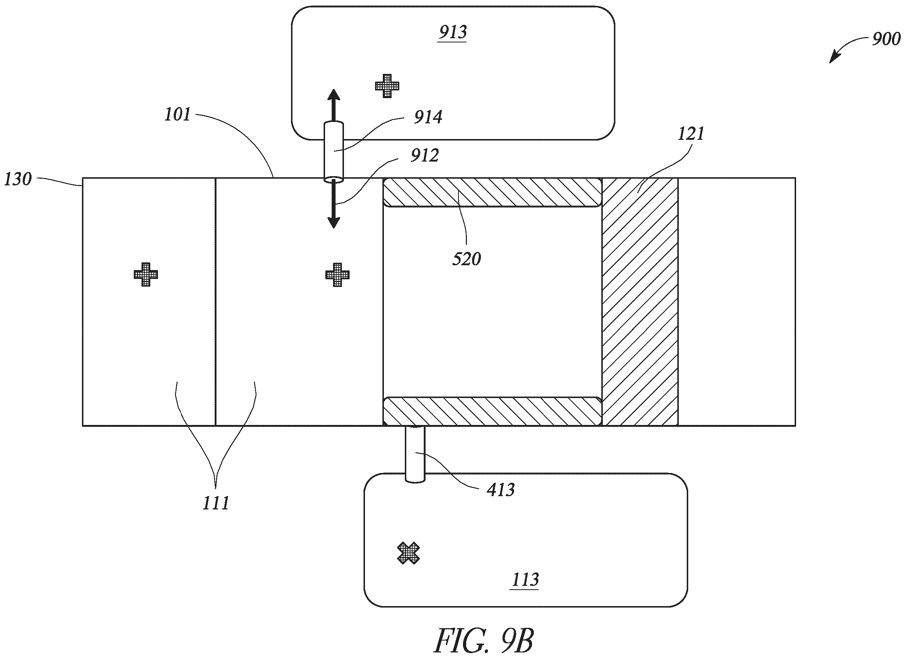

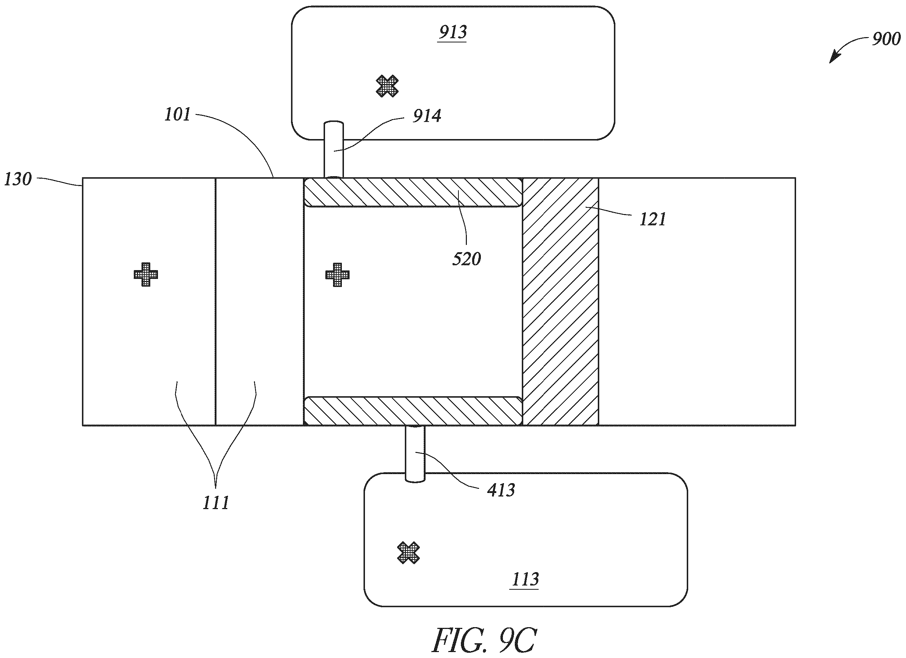

With reference to FIGS. 9A-9C, the air spring 900 comprises three chambers 111, 113, 913, and the air spring 900 can selectively and/or automatically seal (1) the first chamber 111 and the third chamber 913 from the second chamber 113 during compression of the air spring and (2) the first chamber 111 from both of the second chamber 113 and the third chamber 913 during further compression of the air spring. Similar to the embodiment of FIG. 5A, FIG. 9A illustrates the air spring 900 in an open, uncompressed, or extended configuration that allows fluid communication between the first chamber 111, second chamber 113, and third chamber 913 through flow paths 412 and 912 which pass through passages 413 and 914, respectively. FIG. 9B illustrates the air spring 900 in a partially compressed configuration, wherein the passage 413 is blocked by the bushing 520, and FIG. 9C illustrates the air spring 900 in a further compressed configuration, wherein both of passages 413 and 914 are blocked by the bushing 520.

Similar to the air spring 500 of FIG. 5A, the air spring 900 of FIG. 9A comprises a first or primary chamber 111 that, in this embodiment, is defined partially by an interior cylindrical surface or wall of the first body or member 101, and is also defined partially by an internal cavity of the cap 130. In the configuration shown in FIG. 9A, the first or primary chamber 111 is in fluid communication with the second chamber 113 through fluid passage 413 in the first body 101, and the first or primary chamber 111 is in fluid communication with the third chamber 913 through fluid passage 914 in the first body 101.

Also similar to the air spring 500 of FIG. 5A, the air spring 900 comprises an annular bushing 520 coupled to the first piston 121. The bushing 520 is configured such that, when the first piston 121 nears a first intermediate compression position, an outer surface of the bushing 520 will seal off the passage 413. FIG. 9B illustrates such first intermediate compression position of the first piston 121, with a distal or forward end of the bushing 520 sealing off the passage 413. Similar to the air spring 500, the passage 413 will continue to be sealed off as the bushing 520 translates further. For example, when the first piston 121 nears a further compressed position, as shown in FIG. 9C, an outer surface of the bushing 520 will seal off passage 914. Desirably, the bushing 520 comprises a longitudinal length that is long enough to at least seal off both passages 914 and 413 simultaneously. Desirably, the bushing 520 comprises a longitudinal length that is long enough to seal off both passages 914 and 413 simultaneously, and also to allow at least some further compression of the piston 121 after sealing off the last passage 914.

When the air spring 900 rebounds, meaning the piston 121 and bushing 520 move in the extend direction (to the right as oriented in FIG. 9C), first the bushing 520 will eventually no longer be covering the opening into the passage 914, and the first and third chambers 111 and 913 will again be fluidly coupled. As the air spring 900 rebounds further, the bushing 520 will eventually also no longer be covering the opening into the passage 413, and the first, second, and third chambers 111, 113, and 913 will all again be fluidly coupled.

Similar to the air spring 500, one advantage of the air spring 900 as compared to the air spring 400 is that there are less components used to seal the second chamber 113 and the third chamber 913 from the first chamber 111, which can lead to less weight, more efficient manufacturing, and/or the like. A notable difference between the air springs 400 and 900 is that, in the air spring 400, the air chamber defined by the cap 130 is part of the second chamber 113, and thus can be sealed off from the first chamber 111. In the air spring 900, however, the air chamber defined by the cap 130 is part of the first chamber 111, and thus is not sealed off from the first chamber. Various changes to the designs may be made and, depending on the application, it may be desirable for the portion of the chamber defined by the cap 130 to be part of the first chamber 111, the second chamber 113, or the third chamber 913.

As mentioned above, the air spring 900 is shown schematically in FIGS. 9A-9C. In these figures, the second chamber 113 and third chamber 913 are shown as boxes positioned on either side of the first member 101, and each connected to the first member 101 by a single passage 413 or 914. In practice, the second and third chambers 113, 913 may take various shapes, may be positioned in various locations, may fluidly couple to the first chamber 111 through more than one fluid passage, and/or the like. For example, the second and third chambers 113, 913 may be positioned with one at least partially surrounding the other, with one in front of or behind the other (e.g., with one to the left or right of the other with reference to the orientation of FIG. 9A), and/or the like. Further, similar to the embodiment shown in FIG. 5A, a plurality of openings into fluid passages that fluidly couple the first chamber 111 to the second and third chambers 113, 913 may be positioned about the circumference of the inner surface of the first member 101.

Although the various embodiments discussed above with reference to the drawings include one or two chambers (e.g., chambers 113 and 913) selectively sealable from a primary chamber (e.g., chamber 111), other embodiments may include more than two chambers selectively sealable from a primary chamber. For example, some embodiments may include three, four, five, or more separate or distinct chambers that are each selectively and/or automatically sealable from a primary chamber. In some embodiments, as the piston of the air spring moves through its compression stroke, each separate or distinct chamber is configured to be sealed from the primary chamber when the piston of the air spring is at a different position. In some embodiments, as the piston of the air spring moves through its compression stroke, two or more of the separate or distinct chambers is configured to be sealed from the primary chamber at the same time when the piston of the air spring is at a particular position. Such an embodiment may be desirable, for example, for manufacturability purposes, tuning or adjustability purposes, and/or the like.

For example, some embodiments may comprise a plurality of separate or distinct chambers surrounding the first chamber 111, and oriented generally longitudinally along the first member 101. In order to tune the air spring to a particular application, one or more holes could be drilled through the wall of the first member 101 for each of the separate or distinct chambers, with the longitudinal position of each hole defining when each of the separate or distinct chambers may be sealed or opened with respect to the primary chamber 111. FIG. 10 illustrates a schematic cross-sectional view of one example of such an embodiment. This figure illustrates a schematic cross-sectional view of an air spring 1000 as viewed along the longitudinal axis, showing the central first or primary chamber 111 having a wall of the first member 101 around it, and a plurality of separate or distinct additional chambers surrounding the wall of the first member 101 and the primary chamber 111. Specifically, this embodiment includes eight additional separate or distinct chambers 113, 913, 1013, 1014, 1015, 1016, 1017, and 1018. As indicated by the arrows in FIG. 10, one or more holes through the wall of the first member 101 may be included, to allow fluid communication between the primary chamber 111 and each of the separate or distinct chambers. The longitudinal position of each of these holes through the wall (e.g. in the direction normal to the page of FIG. 10) may be different for each of the separate or distinct chambers, leading to each of the separate or distinct chambers being sealed off from the first chamber 111 at different times; or, at least some of the longitudinal positions of the holes through the wall may be the same, leading to at least some of the separate or distinct chambers being sealed off from the first chamber 111 at the same time.

In any of the embodiments that include more than one separate or distinct chamber that is sealable from the primary chamber 111 (such as the embodiments of FIGS. 9A-9C and FIG. 10), each of the separate or distinct chambers may comprise the same volume, each of the separate or distinct chambers may comprise a different volume, and/or some of the separate or distinct chambers may comprise a same volume.

In one aspect, the three chambers may be used on a front fork (for example, as described below), on a rear shock or on the front fork and rear shock of a bicycle. As discussed above, it may be possible to permit one chamber or two chambers to be isolated from the first chamber by changing the height of the bushing, so that it either closes only one passage or both passages.

### Additional Example Air Spring with Second Chamber Sealable from First Chamber

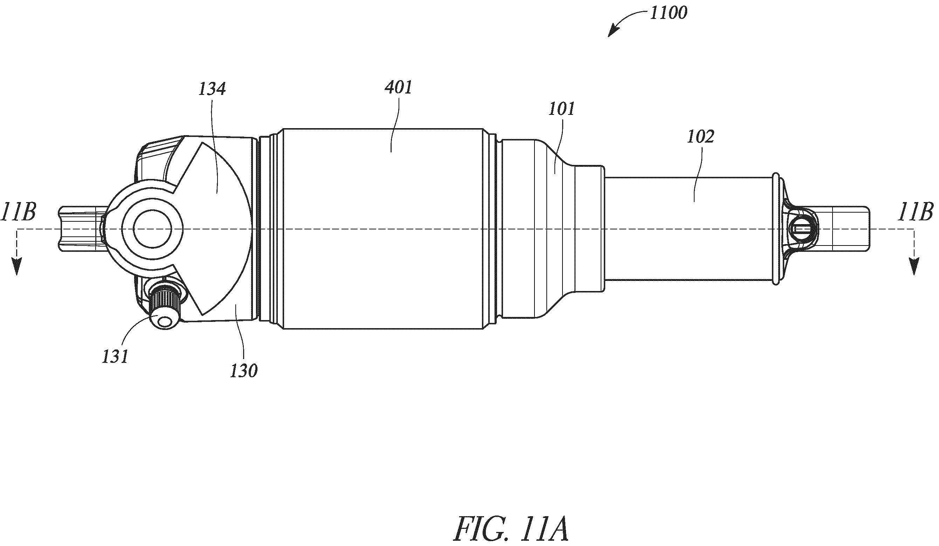

FIGS. 11A and 11B illustrate another embodiment of an air spring 1100. The air spring 1100 is similar to the air spring 400 discussed above and shown in FIGS. 4A and 4B. FIG. 11A illustrates a side view of the air spring 1100, and FIG. 11B illustrates a cross-sectional view of the air spring 1100.

The same or similar reference numbers are used to refer to the same or similar components as used in the air spring 400 and other air springs disclosed herein. For example, with reference to FIGS. 11A and 11B, the air spring 1100 comprises a first member or body 101 that at least partially defines first or primary chamber 111, and a second member or body 401 that at least partially surrounds the first member 101 and at least partially defines portion 402 of chamber 113 therebetween. Similar to the air spring 400, the chamber 113 is split into two portions, with the first portion 402, positioned between the first member 101 and the second member 401, and the second portion 404 defined at least partially by an internal cavity of the cap 130.

The air springs 400 and 1100 also both comprise a damping adjuster 134 that may, for example, operate similarly to the damping adjuster 134 of FIG. 3A in order to adjust the damping performance of a damping assembly 155. It should be noted that not all components of the damping assembly 155 are illustrated in FIGS. 4A and 4B or 11A and 11B, but similar components as shown in FIG. 3A may be included.

One difference in the air spring 1100 is that a third member or body 102 is illustrated attached to the piston 121, with the third member 102 configured to compress and extend along with the piston 121. The third member or body 102 may alternatively be referred to as a shaft, cylindrically body, output shaft, or the like. The third member 102 may at least partially define a chamber 114 that may, for example, comprise damping fluid for use by the damping assembly 155, similar to the design discussed above with reference to the air spring 100 of FIG. 3A. As discussed above, such a third member 102 may also be included in the air spring 400, although the third member 102 is not shown in FIGS. 4A and 4B.

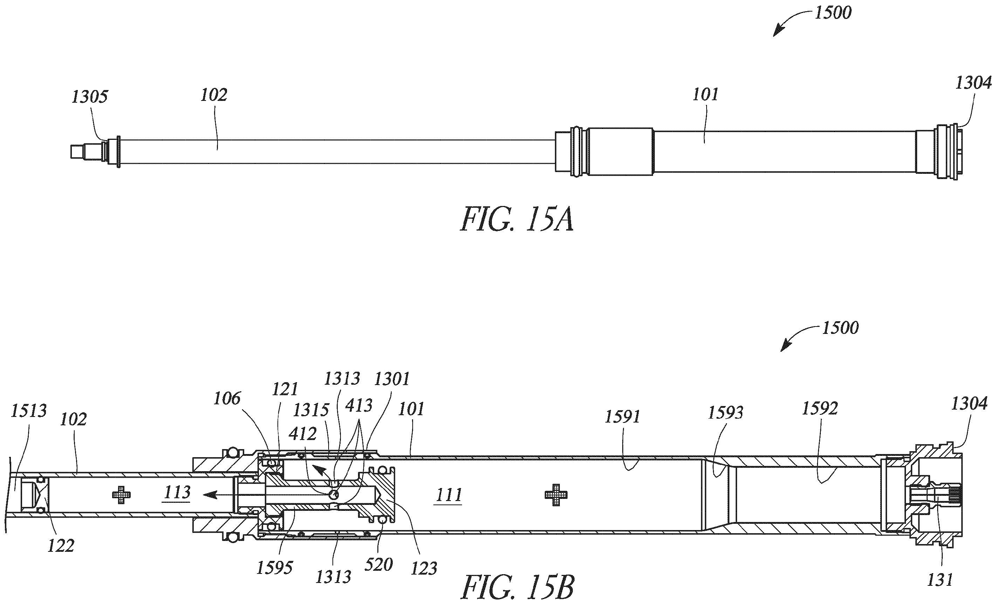

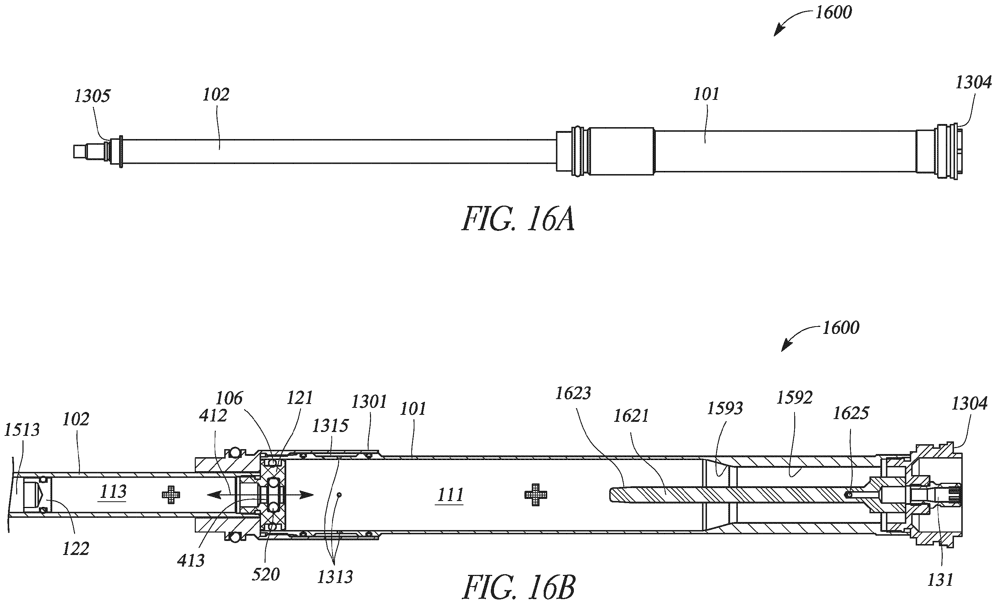

In some embodiments, instead of using chamber 114 for damping fluid, chamber 114 may be in fluid communication with first chamber 111, adding to the effective volume of the pressurized chambers of the air spring. Further, in some embodiments, an additional piston may be located within third member 102, similar to the additional piston 122 of FIG. 3A. Designs that incorporates such a feature are discussed in more detail below with reference to FIGS. 15A through 15C and 16A through 16C.

In both FIGS. 11A and 11B, the air spring 1100 is shown in an extended position, with chambers 111 and 113 in fluid communication with one another through flow paths 412 through plungers 410, similar to the configuration of FIG. 4A. A compressed position or configuration of the air spring 1100 is not shown in these drawings, although the compressed configuration may be similar to the configuration shown in FIG. 4B, with distal surface 415 of the piston 121 causing the plungers 410 and annular plate 414 to translate, thus closing off the flow paths 412.

Similar to FIG. 4A, plus sign symbols are shown in FIG. 11B in the chambers 111 and 113 to indicate that each of those chambers is pressurized and contributing to the pressure that biases piston 121 toward the extended position.

### Additional Example Air Spring with Second Chamber Sealable from First Chamber

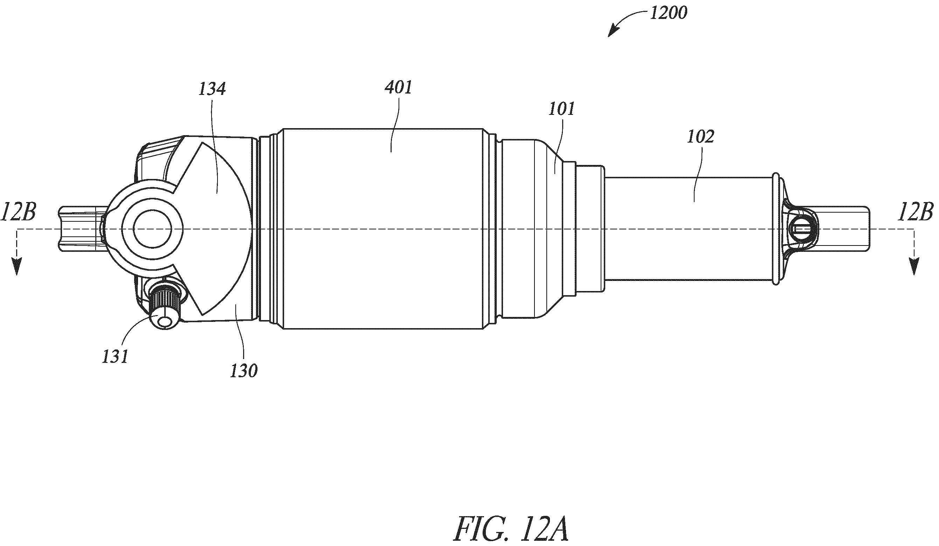

FIGS. 12A and 12B illustrate another embodiment of an air spring 1200, with FIG. 12A depicting a side view and FIG. 12B depicting a cross-sectional view. The air spring 1200 is similar to the air spring 500 discussed above with reference to FIGS. 5A and 5B. The same or similar reference numbers are used to refer to the same or similar features as in the air spring 500 and other air springs disclosed herein.

Like the air spring 500, the air spring 1200 comprises a first body or member 101 and a cap 130 that together at least partially define a primary chamber 111, and a second body or member 401 that at least partially defines a secondary chamber 113 between the second member 401 and first member 101. Further, when the air spring 1200 is in an extended configuration (as shown in FIGS. 12A and 12B), the primary chamber 111 and the secondary chamber 113 are desirably in fluid communication through a plurality of flow paths 412 that pass through openings 417 into passages 413.

Both air springs 1200 and 500 may further comprise a damping assembly 155 and a damping adjuster 134 configured to adjust to the damping performance. Not all components of the damping assembly 155 are shown in these figures, but similar components as shown in FIG. 3A may be used.

One difference in FIGS. 12A and 12B from FIGS. 5A and 5B is that the third member 102 is illustrated. The third member 102 is desirably affixed to the piston 121 and thus translates along with the piston 121 between extended and compressed positions. Although not shown in FIGS. 5A and 5B, the same or similar third member 102 may be included in the air spring 500.

Similar to the air spring 500 shown in FIGS. 5A and 5B, with reference to FIG. 12B, the air spring 1200 comprises a bushing, sleeve, or sealing member 520 that moves along with the piston 121 and is configured to seal off chamber 111 from chamber 113 when the bushing 520 covers the openings 417. Although such a compressed configuration is not shown for the air spring 1200, the configuration may be similar to the compressed configuration of air spring 500 illustrated in FIG. 5B.

### Additional Example Air Spring with Second Chamber Sealable from First Chamber

As discussed above, the air spring concepts disclosed herein are not limited to use in rear bicycle shock absorbers. The concepts disclosed herein may also be used in other types of air springs, such as a front fork air spring. For example, as discussed above with reference to FIG. 1, a bicycle may include a front fork or suspension assembly 12. The suspension assembly 12 may include, for example, two arms or legs extending downward from an upper or middle portion of the suspension assembly 12 toward a central axis of the front wheel 8. One or both of those arms or legs may incorporate an air spring, including any of the fork-style air springs discussed below with reference to FIGS. 13A-13C, 14A-14C, 15A-15C, and 16A-16C. In each of the air springs depicted in these figures, the same or similar reference numbers are used to refer to the same or similar components as with other embodiments disclosed herein, and the descriptions focus more on differences from other embodiments disclosed herein. Further, plus sign symbols and x-symbols are used, similar to in other figures, to indicate when particular chambers are contributing to biasing a piston toward an extended direction, or when a chamber is not contributing to such biasing, respectively.

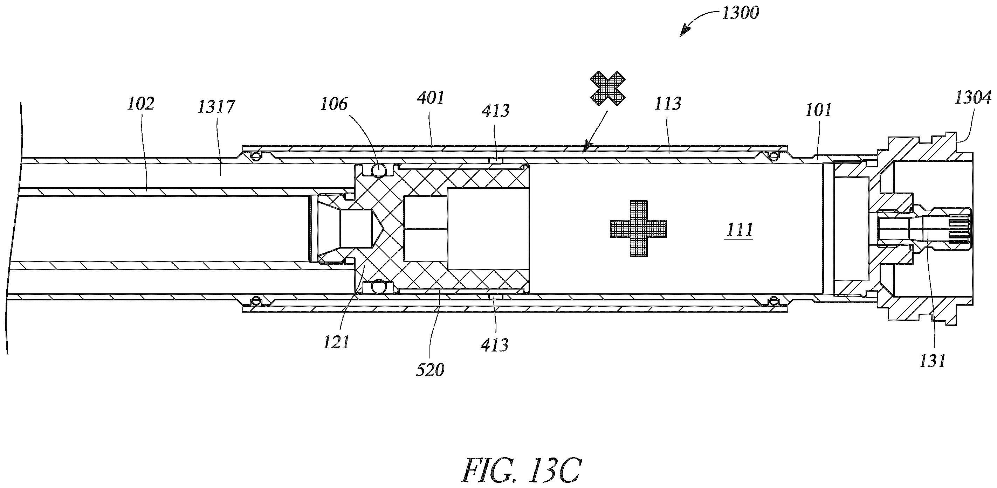

FIGS. 13A-13C illustrate another embodiment of an air spring 1300, with this embodiment being configured to be used in a front fork suspension assembly, such as the suspension assembly 12 of FIG. 1. FIG. 13A illustrates a side view, and FIGS. 13B and 13C illustrate cross-sectional views. The principles of operation of the air spring 1300 are similar to those of air springs 500 and 1200 discussed above. Accordingly, the same or similar reference numbers are used to refer to the same or similar elements. For example, the air spring 1300 comprises a first body or member 101 that at least partially defines a first or primary chamber 111, and a first piston 121 that is slideable or translatable within the first member 101 adjacent to the chamber 111. The air spring 1300 further comprises a second body or member 401 positioned around the first member 101 and defining a second chamber 113 therebetween. The second body or member 401 may also be referred to as a sleeve surrounding the first member 101. When the piston 121 is in an extended position, as illustrated in FIGS. 13A and 13B, the chambers 111 and 113 are in fluid communication through flow paths 412 that pass through passages 413. In this embodiment, the passages 413 comprise a plurality of holes in the wall of first member 101, although other arrangements may be used.

When the piston 121 is in a compressed position, as illustrated in FIG. 13C, a bushing, sleeve, or sealing member 520 coupled to the piston 121 desirably blocks the passages 413, thus sealing off chamber 111 from chamber 113. Similar to other figures described herein, plus sign symbols are used to depict the chambers that are currently contributing to biasing the piston 121 in the extend direction, and x-symbols are used to depict chambers that are not currently contributing to biasing the piston 121 in the extend direction.

With reference to FIG. 13B, some embodiments of the air spring 1300 may also include an additional tertiary chamber 1315 positioned between an outer surface of the first member 101 and an inner surface of another member or body 1301, such as a sleeve surrounding the first member 101. Utilizing such a sleeve (e.g., member or body 401 and/or member or body 1301) surrounding the first member 101 can be desirable, for example, because it can facilitate the spring assembly being separated from the front fork during maintenance without exposing the inside of the secondary chamber 113 and/or tertiary chamber 1315 to dirt, debris, and/or the like. Similar to the secondary chamber 113, the tertiary chamber 1315 may be in fluid communication with a plurality of passages 1313 that can be selectively blocked or unblocked by the bushing 520 of the piston 121. In the extended position shown in FIG. 13B, the passages 1313 are currently sealed off or blocked by the bushing 520. When the piston 121 moves toward a compressed position, such as the position shown in FIG. 13C, the passages 1313 will become unblocked by the bushing 520, and thus allow fluid communication between the tertiary chamber 1315 and another chamber, such as a negative spring chamber 1317 positioned on the opposite side of piston 121 from chamber 111 (see FIG. 13C).

The negative spring chamber 1317 shown in FIG. 13C may operate as a negative spring, similarly to chamber 112 of the air spring 100 shown in FIG. 3A and described above. Adding tertiary chamber 1315 in fluid communication with negative spring chamber 1317 through the passages 1313 can be desirable, such as, for example, to increase the effective volume of the negative spring. Selectively blocking off fluid communication between chambers 1315 and 1317 as the piston 121 approaches the fully extended position, however, can be desirable for similar reasons as to why it can be desirable to block off fluid communication between chambers 113 and 111 as the piston 121 approaches the fully compressed position. For example, blocking off passages 1313 as the piston 121 approaches the fully extended position can desirably cause an abrupt increase in the spring rate of the negative spring, thus helping to avoid a harsh topping out of the air spring 1300.

Various modifications to the air spring of 1300 may be made to adjust its performance characteristics. For example, the length and/or diameter of chamber 113 may be adjusted. As another example, multiple separate chambers similar to chamber 113 may be included, similar to as shown in FIG. 9A. Further, the positioning of the passages 413 may be adjusted, such as moving them to the left or to the right (as the figure is oriented in FIG. 13B). As another example, a fluid flow path through piston 121 into a chamber defined by body or member 102 may be added, similar to as described below with reference to FIGS. 15A through 15C and 16A through 16C. Further, the pressure in chamber 111 may be adjusted through valve 131.

With further reference to FIGS. 13A through 13C, the second member 401 in this embodiment is a sleeve, and that sleeve and other portions of the air spring 1300 may be sized to fit within a stanchion tube of a front suspension assembly, such as the suspension assembly 12 of FIG. 1.

### Additional Example Air Spring with Second Chamber Sealable from First Chamber

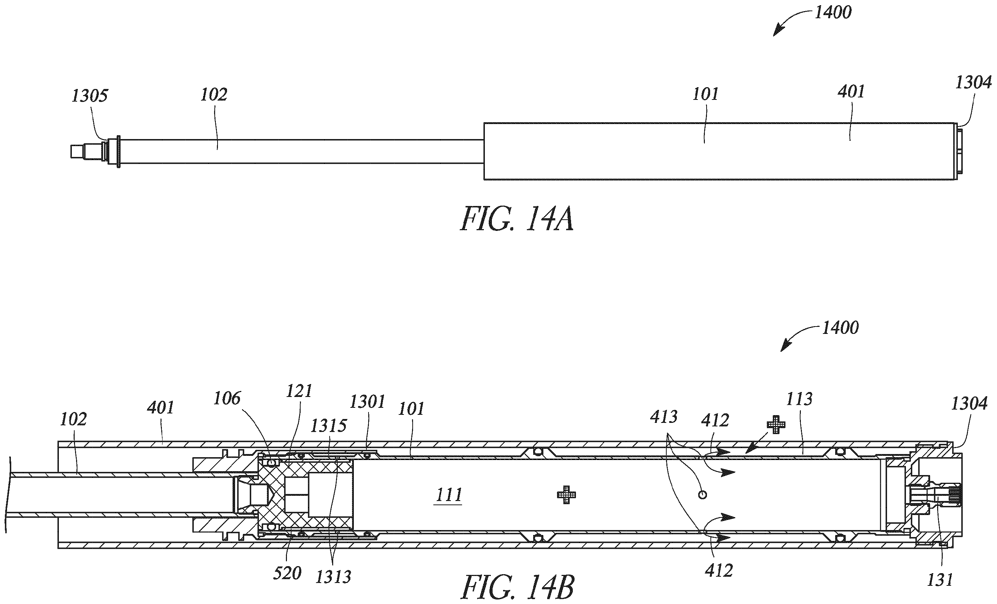

Turning to FIGS. 14A-14C, these figures illustrate another embodiment of an air spring 1400 configured for use in a front fork suspension assembly, such as the suspension assembly 12 of FIG. 1. The air spring 1400 is similar in design to the air spring 1300 described above, and the same or similar reference numbers are used to refer to the same or similar components. One difference in the air spring 1400, however, is that the second member 401 in this embodiment is the stanchion tube that the air spring 1300 may be positioned within. Stated another way, instead of using the sleeve 401 of FIG. 13A as the second member that defines chamber 113, the front fork assembly stanchion tube that the rest of the air spring assembly fits into when installed acts as the second member that defines chamber 113. Such a design can have certain benefits over the air spring 1300, such as by utilizing fewer components and thus potentially reducing weight and/or cost. It can also be desirable to utilize the design of air spring 1300, however, such as to enable production of the entire or substantially the entire air spring assembly before assembling the air spring assembly into the stanchion tube.

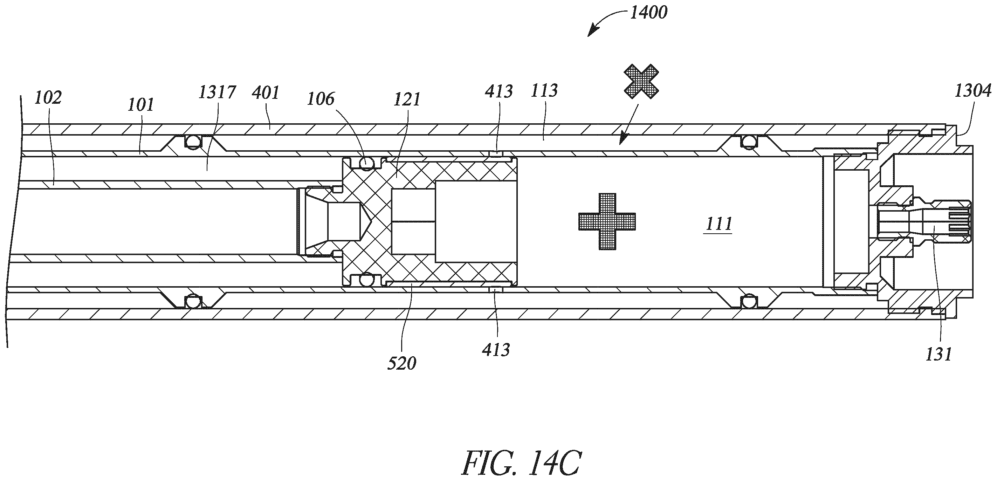

FIG. 14A illustrates a side view of the air spring 1400, and FIGS. 14B and 14C illustrate cross-sectional views. FIGS. 14A and 14B depict the air spring 1400 and a fully extended configuration, while FIG. 14C depicts the air spring 1400 in a compressed configuration. Similar to the air spring 1300, when the piston 121 is in an extended configuration (as shown in FIG. 14B), chambers 111 and 113 are in fluid communication through flow paths 412 which pass through passages 413. When the piston 121 is in a compressed configuration (as shown in FIG. 14C), chamber 113 is desirably sealed off from chamber 111 by the bushing 520 obstructing the flow paths through passages 413.

FIGS. 14B and 14C also illustrate that the air spring assembly 1400 may comprise a negative spring, similar to the air spring 1300 shown in FIGS. 13B and 13C, which includes member 1301, tertiary chamber 1315, negative spring chamber 1317, and a plurality of passages 1313.

Various modifications to the air spring 1400 may be made to adjust its performance characteristics. For example, the length and/or size of chambers 111 and/or 113 may be modified, a flow path through piston 121 into a chamber on the other side of piston 121 and inside body or member 102 may be provided (as shown in FIGS. 15B and 16B), the pressure in chamber 111 may be adjusted through valve 131, and/or the like. Further, the positioning of the passages 413 may be changed and/or additional chambers and passages may be added, such as is shown in the example of FIG. 9A.

### Additional Example Air Spring with Second Chamber Sealable from First Chamber

FIGS. 15A through 15C illustrate another embodiment of an air spring 1500 that performs a similar function as other air springs disclosed herein (e.g., sealing off one chamber from another chamber in a compressed configuration). FIG. 15A is a side view, and FIGS. 15B and 15C are cross-sectional views. Further, FIGS. 15A and 15B depict the air spring 1500 in a fully extended configuration, while FIG. 15C illustrates the air spring 1500 in a compressed configuration.

The air spring 1500 has similarities to the air springs 1300 and 1400 described above, and the same or similar reference numbers are used to refer to the same or similar components. For example, the air spring 1500 comprises a first member or body 101 at least partially defining a first or primary chamber 111. The first or primary chamber 111 is additionally in fluid communication with a second chamber 113 when the air spring 1500 is in an extended configuration. For example, with reference to FIG. 15B, the chamber 111 is shown in fluid communication with chamber 113 through flow paths 412 that can pass through one or more passages 413. With reference to FIG. 15C, with the air spring in a compressed configuration, the chamber 111 has been sealed off from chamber 113. The specific configuration of where these chambers are and how the sealing off is accomplished is different than in the air springs 1300 and 1400, however.

In the air spring 1500, the second chamber 113 is positioned within a cavity of the body or member 102, as shown in FIGS. 15B and 15C. In some embodiments, including the depicted embodiment, a second piston 122 may be included in the cavity of the member 102, separating the second chamber 113 from a compensation chamber 1513. The second piston 122 and compensation chamber 1513 may act similarly to the second piston 122 and compensation chamber 113 of air spring 100, as described above and shown in FIGS. 3A and 3B. Inclusion of the second piston 122 and compensation chamber 1513 is not required, but can provide some benefits, similar to as described above with reference to air spring 100.

With further reference to FIG. 15B, the air spring 1500 further comprises a shaft or member 1595 extending forward (in the right direction as oriented in FIG. 15B) from the first piston 121 and having a third piston 123 positioned at a distal end thereof. The shaft 1595 further comprises a plurality of passages 413 that allow fluid communication between chamber 111 and an internal cavity of the shaft 1595 that is in fluid communication with chamber 113. Desirably, the third piston 123 comprises a size or diameter that is smaller than piston 121, such that, in an extended configuration, a bushing, O-ring, or other seal 520 of third piston 123 does not seal against an interior wall of member 101 like the seal 106 of piston 121. Stated another way, in an extended configuration, the seal 520 of piston 123 allows gas within chamber 111 to flow around the seal 520, through a space between seal 520 and the interior wall of member 101, while the seal 106 of piston 121 does not allow gas within chamber 111 to flow around the seal 106.

With further reference to FIG. 15B, the first member 101 further defines a first wall 1591 having a first diameter, a second wall 1592 having a second, smaller diameter, and a transition region 1593 that tapers in size from the diameter of the first wall 1591 to the smaller diameter of the second wall 1592. Desirably, the first wall 1591 is sized such that the seal 106 of piston 121 will seal against the first wall 1591, and the second wall 1592 is sized such that the seal 520 of third piston 123 will seal against the second wall 1592.

In operation, the seal 520 of third piston 123 desirably does not engage the second wall 1592 in an extended configuration (as shown in FIG. 15 B), but the seal 520 of third piston 123 desirably does engage the second wall 1592 in a compressed configuration (as shown in FIG. 15C). Further, the transition region 1593 can desirably help to transition the seal 520 into a sealing engagement with second wall 1592 without damaging the seal 520. Although some embodiments may not include the transition region 1593, including the transition region 1593 may be desirable, such as to limit or prevent damage to the seal 520. Further, utilizing the transition region 1593 may be desirable to, for example, help account for tolerances in the design that may allow for at least some lateral or side to side movement of the third piston 123 (e.g., in the up-and-down direction as FIG. 15B is oriented), and thus may help to center the third piston 123 as the third piston 123 enters the space defined by the second wall 1592.

As shown in FIG. 15C, when the first piston 121 moves into a compressed position, the third piston 123 desirably engages second wall 1592 of the body 101, and thus seals off chamber 111 from chamber 113 via the seal 520. FIG. 15C depicts this sealing off by showing a plus sign symbol in chamber 111 and x-symbols in chamber 113. It should be noted that, when the air spring 1500 is in an extended configuration, as shown in FIG. 15B, the pressurized area to the left of seal 520 (as oriented in FIG. 15B), but outside of the shaft 1595, may be considered part of chamber 111. When the air spring is in a compressed configuration, with the seal 520 sealing against wall 1592, however, the area to the left of the seal 520, but outside of the shaft 1595, may be considered part of chamber 113, since that area remains in fluid communication with the rest of chamber 113 but not with chamber 111 to the right of the seal 520. This arrangement illustrates a further difference of the design of air spring 1500 as compared to some of the other designs described herein. Specifically, in some of the other designs described herein, an opening into a passage that defines a flow path (such as various embodiments of passages 413 defining flow paths 412 described herein), gets directly sealed off in a compressed configuration. In the embodiment shown in FIGS. 15A-15C, however, the openings into passages 413 that define the flow paths 412 are not directly sealed off in the compressed configuration. Rather, they are indirectly cut off from fluid communication with chamber 111 by seal 520 sealing against wall 1592. One potential benefit of such a design is that the shape, positioning, size, and/or the like of passages 413 can be adjusted independently of the mechanism that seals off one chamber from another (e.g., piston 123 and wall 1592).

FIGS. 15B and 15C also illustrate that the air spring assembly 1500 may comprise a negative spring, similar to the air spring 1300 shown in FIGS. 13B and 13C, which includes member 1301, tertiary chamber 1315, negative spring chamber 1317, and a plurality of passages 1313.

Various changes to the air spring assembly 1500 may be made in order to adjust its performance characteristics. For example, the relative sizes and/or lengths of walls 1591 and 1592 may be adjusted, the length of shaft 1595 (and thus the spacing between pistons 121 123) may be adjusted, the pressure in chamber 111 may be adjusted, such as by introducing or removing gas through valve 131, a pressure within compensation chamber 1513 may be adjusted, and/or the like.

### Additional Example Air Spring with Second Chamber Sealable from First Chamber

FIGS. 16A-16C illustrate another embodiment of an air spring 1600 that is similar in design to air springs 1300, 1400, and 1500, and thus the same or similar reference numbers are used to refer to the same or similar components. For example, the air spring 1600 comprises a first body or member 101 that at least partially defines a first pressurized chamber 111, and a first piston 121 that translates with respect to body 101 adjacent to the pressurized chamber 111. Further, like the air spring 1500 described above, the second chamber 113 is positioned within a cavity of member or body 102, with a second piston 122 separating chamber 113 from compensation chamber 1513. Also similar to air spring 1500 described above, some embodiments may not include the second piston 122 and compensation chamber 1513.

Additionally, the body 101 shown in FIG. 16B includes a second wall 1592 and transition region 1593 similar to those depicted in FIG. 15B and described above. Some embodiments may not include these features, however, particularly embodiments like the air spring 1600 that do not utilize such features for engaging a third piston (such as the third piston 123 of FIG. 15B). It may be desirable to include those features in some embodiments, however, such as to strengthen the body 101 in the region of the second wall 1592, to allow usage of the same body 101 with different air spring designs, and/or the like.

FIG. 16A illustrates a side view of the air spring 1600, and FIGS. 16B and 16C illustrate cross-sectional views. Further, FIGS. 16A and 16B illustrate the air spring 1600 in a fully extended configuration, whereas FIG. 16C illustrates the air spring assembly 1600 in a compressed configuration, with chamber 111 sealed off from chamber 113.

One difference in the air spring 1600 from the air spring 1500 described above is that chamber 111 is sealed off from chamber 113 in a different fashion. With reference to FIG. 16B, in this embodiment, in an extended configuration, primary chamber 111 is in fluid communication with secondary chamber 113 via flow path 412 that passes through passage 413 of the piston 121. The air spring 1600 comprises a stop, plunger rod, or other member 1621 affixed at one end of the air spring 1600 and extending toward the piston 121. The plunger rod 1621 is sized to fit within passage 413 of piston 121 and seal against seal or bushing 520 of piston 121. When the piston 121 is moved to a compressed configuration, as shown in FIG. 16C, the plunger rod 1621 is desirably sealed against seal 520, thus closing off the flow path 412 and sealing off chamber 111 from chamber 113. This is depicted by the plus sign symbols shown in chamber 111 and the x-symbol shown in chamber 113.

Desirably, the rod 1621 comprises a generally cylindrical shape that is complementary to the shape of the seal 520. Further, desirably, a distal end of the rod 1621 comprises a tapered region 1623 that tapers to a smaller diameter than the main cylindrical portion of the rod 1621. This can be desirable, for example, such as to help center the rod 1621 and/or piston 121 as they engage one another, to help avoid or limit damage to the seal or bushing 520, and/or the like. The rod 1621 further desirably comprises one or more openings 1625 that enable fluid communication between the chamber 111 and the valve 131 in order to allow adjustment of the pressure within chamber 111.

FIGS. 16B and 16C also illustrate that the air spring assembly 1600 may comprise a negative spring, similar to the air spring 1300 shown in FIGS. 13B and 13C, which includes member 1301, tertiary chamber 1315, negative spring chamber 1317, and a plurality of passages 1313.

Various modifications or adjustments may be made to the air spring 1600 in order to adjust its performance characteristics. For example, the size and/or length of plunger rod 1621 may be adjusted, the second piston 122 may or may not be included, the pressure within chambers 111 and/or 1513 may be adjusted, the wall 1592 and tapered region 1593 may or may not be included, and/or the like.

### Example Air Spring with Increased Spring Rate Near Compressed Position

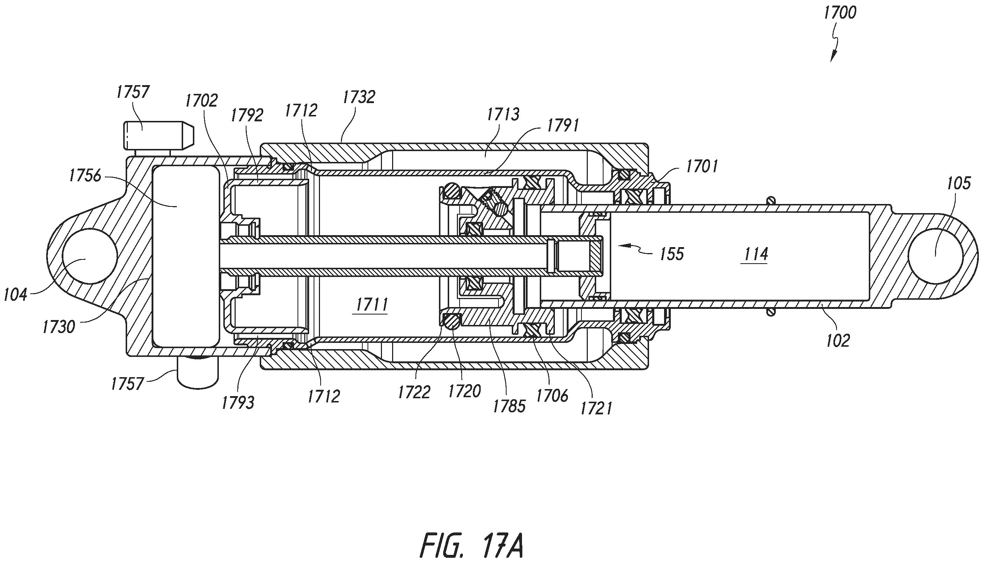

FIGS. 17A-17E, 18A-18D, and 19A-19D illustrate additional embodiments of air springs 1700, 1800, and 1900, respectively, that can achieve the same or similar benefits as other embodiments disclosed herein (e.g., increasing the rate of spring rate increase near the end of stroke in compression of the air spring), but can achieve these benefits using different novel techniques, including techniques that make the design more adjustable and/or tunable, easier and/or less costly to manufacture, and/or more compact.

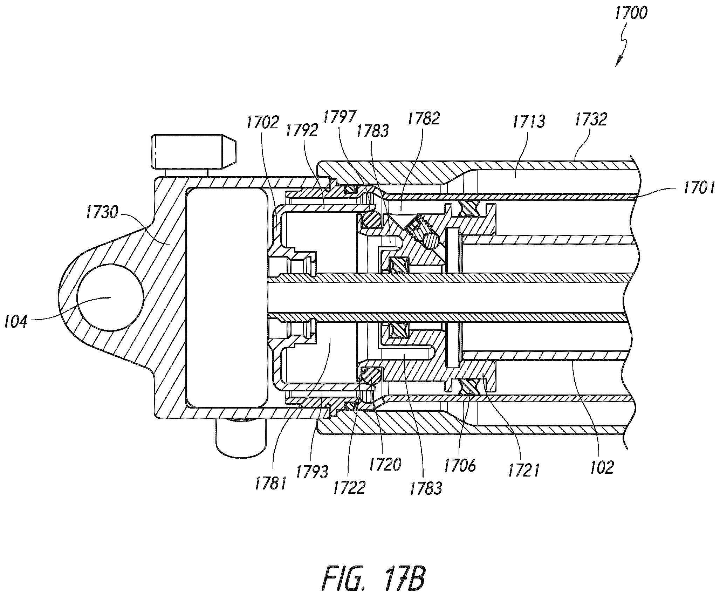

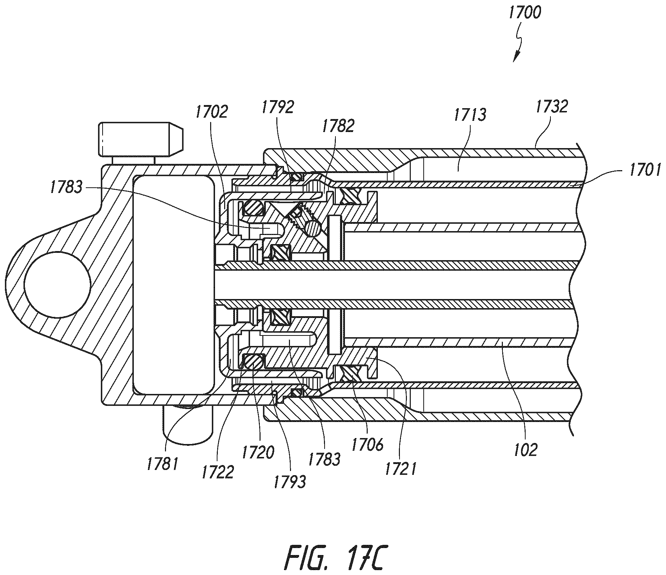

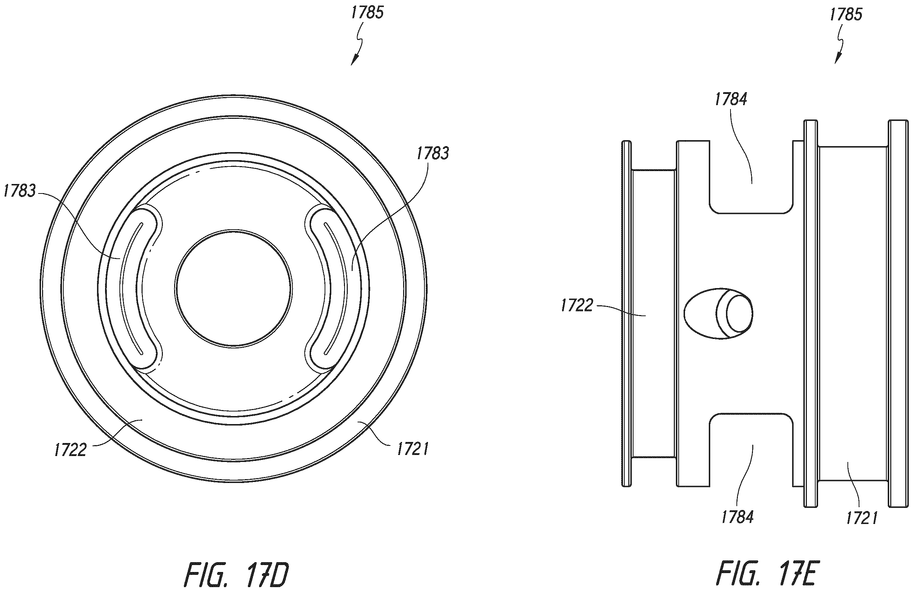

FIGS. 17A-17E illustrate an example embodiment of an air spring 1700. FIGS. 17A, 17B, and 17C are cross-sectional views of the air spring 1700 in an extended position, an intermediate position, and a compressed position, respectively. FIGS. 17D and 17E illustrate additional views of a sealhead 1785 of the air spring 1700. With reference to FIG. 17A, the air spring 1700 comprises a first body or member 1701 that includes a first wall 1791 that at least partially defines a first gas chamber 1711. A first piston 1721 is coupled to an output shaft or third member 102 and configured to slide with respect to the first body 1701, in order to compress or extend the air spring 1700, decreasing or increasing the spacing between eyelets 104 and 105.

The air spring 1700 may include various damping components, similar to other embodiments discussed above, such as damping assembly 155 that can interact with a fluid within damping chamber 114 in order to damp movement of the third member 102 with respect to the first member 1701. The damping features may also include one or more adjustment knobs, such as damping knobs 1757 shown in FIG. 17A, which may control one or more damping circuits or mechanisms (indicated by box 1756) which can control, for example, an amount of compression damping and/or rebound damping. Any type of damping circuits or mechanisms 1756 may be utilized, including, for example, the damping features shown in FIG. 3A that include, for example, a rod 151 and adjustment knob or damping adjuster 134 in order to adjust a level of damping provided by the damping assembly 155.

With continued reference to FIG. 17A, the air spring 1700 further comprises a second body or member 1732 that surrounds or is positioned generally around the first body or member 1701 and defines a second chamber 1713 in a space therebetween. Additionally, a plurality of flow passages 1712 are formed through the first body or member 1701 that allow fluid communication between the first chamber 1711 and the second chamber 1713.

The first piston 1721 comprises a seal 1706 that seals against the first wall 1791 of the first body or member 1701. A pressurized gas is desirably present in the first chamber 1711 and second chamber 1713. Since the seal 1706 seals against the first wall 1791, the pressure of the pressurized gas will bias the first piston 1721 and the attached third member 102 toward the extended position (e.g., the position shown in FIG. 17A). When the air spring 1700 is compressed (e.g., when the first piston 1721 moved in a direction toward eyelet 104), the first piston 1721 will cause a reduction in volume of the pressurized gas that is within the first chamber 1711 and second chamber 1713, thus increasing the pressure within these chambers and increasing the resistance to compression of the air spring 1700.

Air spring 1700 further comprises a cup 1702 positioned at an opposite end of the first chamber 1711 as the end at which the first piston 1721 is positioned in the extended position. In some embodiments, the cup may act as a sleeve, and in such cases may be referred to as a sleeve. The cup 1702 is desirably positioned in a fixed location with respect to the first body 1701 (such as by, for example, being affixed to the first body 1701 and/or being affixed to another component of the air spring that is fixed to the first body 1701, such as cap 1730). The cup 1702 comprises an annular second wall 1792 that extends into the first chamber 1711 in a direction toward the first piston 1721. The annular wall 1792 is desirably of a smaller diameter than the first wall 1791 of the first body 1701. Desirably, the annular wall 1792 also comprises an outer diameter that is smaller than an adjacent portion of the first body 1701, thus forming an annular space 1793 therebetween. Such a configuration can have a number of benefits. For example, different cups having different outer and/or inner diameters, and/or having different annular second wall lengths can be used to easily adjust or tune the performance of the air spring (e.g., by changing the relative sizes of the first and second volumes or portions of gas 1781, 1782, by changing the relative diameters of the first and second pistons 1721, 1722, and/or by changing at what point in the stroke of the air spring the seal 1720 engages the annular second wall 1792-all of which are features described in more detail below). Another benefit of using the cup 1702 is that manufacturing of various designs can be conducted more easily and more cost-effectively. In some embodiments, an end user of the air spring may even be able to adjust the performance of their air spring by, for example, removing cap 1730, replacing cup 1702 with a different cup, and reinstalling cap 1730.

With continued reference to FIG. 17A, the air spring 1700 further comprises a second piston 1722 that comprises a smaller diameter than the first piston 1721. In some embodiments, the second piston 1722 may be referred to as a plunger. The second piston 1722 is in a fixed position with respect to the first piston 1721 and thus moves along with the first piston 1721 when the air spring 1700 is compressed or extended. In this embodiment, the first piston 1721 and second piston 1722 are both part of a single body that can slide with respect to the first body 1701 (in this case, a sealhead 1785), but other embodiments may provide the first piston 1721 and second piston 1722 as separate parts that are in a fixed position with respect to each other. Including both pistons on a single sealhead 1785 can be beneficial, however, such as to create a more compact assembly, to make an assembly that is easier and/or less costly to manufacture, to make an assembly that has fewer tolerance stack-up issues, and/or the like.

The second piston 1722 comprises a seal 1720 that does not seal against the first wall 1791. Accordingly, as shown in the extended position of FIG. 17A, a single amount or volume of gas that is positioned within the first chamber 1711 and second chamber 1713 will expand into the space between seals 1720 and 1706 and thus act on the first piston 1721 (e.g., to bias the first piston 1721 toward the extended position). Further, the single volume or amount of gas that exists within the first chamber 1711 and second chamber 1713 in the extended position will expand into the annular space 1793 between the wall 1792 of the cup 1702 and the first body 1701, and into an interior space of the cup 1702 that is at least partially defined by an inner surface of the second wall 1792.

Turning now to FIGS. 17B and 17C, FIG. 17B illustrates the air spring 1700 in an intermediate position, and FIG. 17C illustrates the air spring 1700 in a fully compressed position. In the intermediate position of FIG. 17B, it can be seen that the seal 1720 of the second piston 1722 has engaged and sealed against the second wall 1792 of the cup 1702. In some embodiments, the second wall 1792 may be shaped to include a ramp or tapered section 1797 in order to help guide the second piston 1722 and seal 1720 into engagement with the second wall 1792 while limiting damage to the seal 1720. Once the seal 1720 of the second piston 1722 is sealed against the second wall 1792, the pressurized gas within the first chamber 1711 and second chamber 1713 that in the extended position had acted as a single volume or amount of gas on the first piston 1721 will now be split into two volumes or portions of gas 1781 and 1782 that are sealed off from one another by the seal 1720 and second wall 1792. Due to the relatively small volume of the first volume or portion of gas 1781, continued compression of the air spring 1700 beyond the intermediate position shown in FIG. 17B (such as continued compression toward the compressed position of FIG. 17C) will cause a spring rate of the air spring to increase at a higher rate than if the second piston 1722 were not sealed against the second wall 1792 and the pressurized gas remained as a single volume or amount of gas. For example, a spring rate with a steep increase near the end of stroke, similar to as shown by the dashed line in the graph of FIG. 8 discussed above, may be exhibited by the air spring 1700.

As mentioned above, one benefit of the air spring 1700 design over various other air spring designs is that the spring rate characteristics can be tuned in various ways in order to meet a particular desired spring rate curve or characteristic. For example, as can be seen in FIGS. 17B and 17C, even after the second piston 1722 seals against the second wall 1792 of the cup 1702 and thus separates the pressurized gas into two separate volumes or portions of gas 1781, 1782, both of the separate volumes or portions of gas 1781, 1782 will continue to bias the air spring toward the extended position. Specifically, the second volume or portion of gas 1782 will continue to act on the first piston 1721, while the first volume or portion of gas 1781 will act on the second piston 1722. By having both volumes or portions of gas continue to act on the pistons, adjustments to the components that define the sizes of the chambers that these volumes or portions of gas exist within can be used to fine tune the spring curve characteristics between the intermediate position of FIG. 17B and the compressed position of FIG. 17C. Stated another way, once the gas is split into two separate volumes 1781 and 1782, the two volumes or portions of gas essentially operate as separate air springs, that are acting in parallel on the output shaft 102. Adjustments made to the relative volumes of these parallel air springs can help to more finely tune the operating characteristics of the air sprig 1700. For example, the air spring 1700 may be tuned such that the jump in spring rate near the compressed position (e.g., the jump in spring rate indicated by the dashed line in FIG. 8), is less abrupt than in the dashed line shown in FIG. 8, but still exhibits a higher slope than a standard air spring in that area (e.g., than the solid line in FIG. 8).

For example, the characteristics of how the second volume or portion of gas 1782 continues to act on the first piston 1721 between the intermediate and compressed positions can be controlled by, among other things, the size of the second chamber 1713 defined by the second body 1732, the size of the annular space 1793 between the cup 1702 and first body 1701, and the length of the annular wall 1792 of the cup 1702. Further, the characteristics of how the first volume or portion of gas 1781 acts on the second piston 1722 can be controlled by, among other things, the inner diameter of the wall 1792 of the cup 1702, the depth of the cup 1720 (e.g., the length of the annular wall 1792), and the axial distance between the first piston 1721 and second piston 1722.

The performance characteristics (such as the spring rate curve) for the air spring 1700 can further be tuned by including one or more voids, holes, depressions, and/or the like that can be sized to affect the relative volumes of the first volume or portion of gas 1781 and second volume or portion of gas 1782 in the intermediate and compressed positions. For example, turning to FIGS. 17D and 17E, these figures illustrate additional details of the sealhead 1785 that comprises the first piston 1721 and second piston 1722. FIG. 17D is an end view of the sealhead 1785 (e.g., looking from the left side of the orientation of FIG. 17A), and FIG. 17E is a top view of the sealhead 1785 (e.g., looking from the top of the orientation of FIG. 17A). As can be seen in FIG. 17D, and also in the cross-sectional view of FIG. 17C, the sealhead 1785 in this embodiment comprises two voids 1783 that act to increase the volume of the first volume or portion of gas 1781 in the compressed position beyond what the volume would be if those voids 1783 were not included. As can be seen in FIG. 17C, the voids 1783 allow at least a portion of the first volume or portion of gas 1781 to be positioned beyond the seal 1720 (e.g., in a direction toward the first piston 1721), thus increasing the volume of the first volume or portion of gas 1781 over what it would be if the gas were not able to extend beyond the seal 1720. With reference to FIG. 17B, this shows that in the intermediate position, when the seal 1720 has just started to seal against the second wall 1792, the voids 1783 allow at least a portion of the first volume or portion of gas 1781 to be positioned outside of the cup 1702, thus increasing the size of the first volume or portion of gas 1781 over what it would be if the first volume or portion of gas 1781 were limited to being only within the cup 1702.

With continued reference to FIG. 17D and 17C, in this embodiment, the sealhead 1785 includes two voids 1783 that comprise arc-shaped grooves of different depths. Other embodiments may use more or fewer voids 1783, may shape the voids differently, such as blind holes instead of a blind arc-shaped groove, and/or the like.

FIG. 17E illustrates that the sealhead 1785 also includes two voids 1784 that act to increase the volume of the second volume or portion of gas 1782 that is acting on the first piston 1721 even in the intermediate and compressed positions. In this case, the voids 1784 comprise two opposing slots or grooves through an outer portion of the sealhead 1785, but other embodiments may use a different number of voids 1784, may shape them differently, and/or the like.

### Additional Example Air Spring with Increased Spring Rate Near Compressed Position

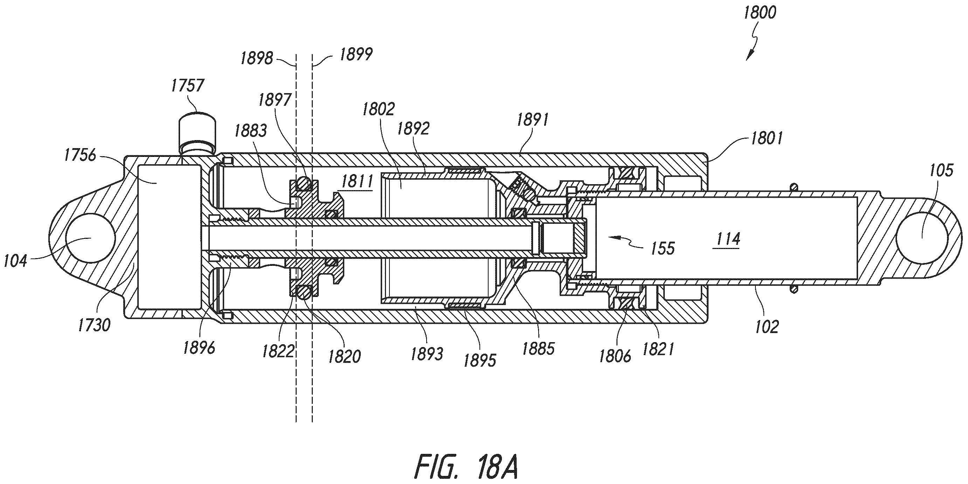

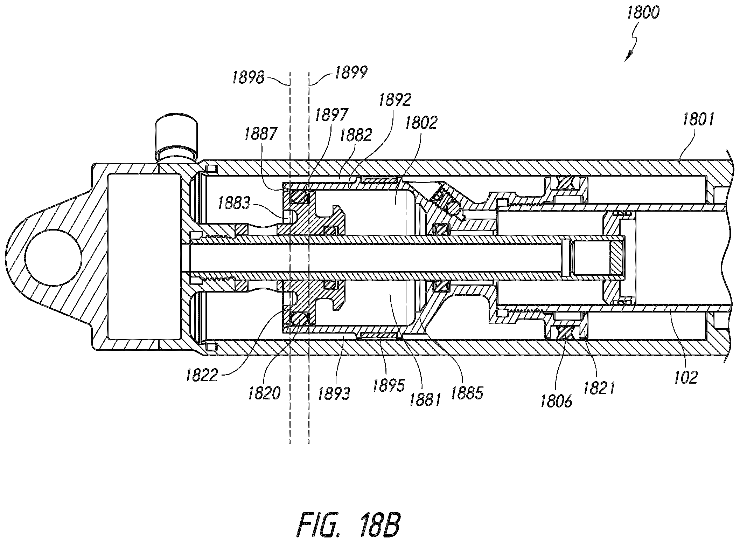

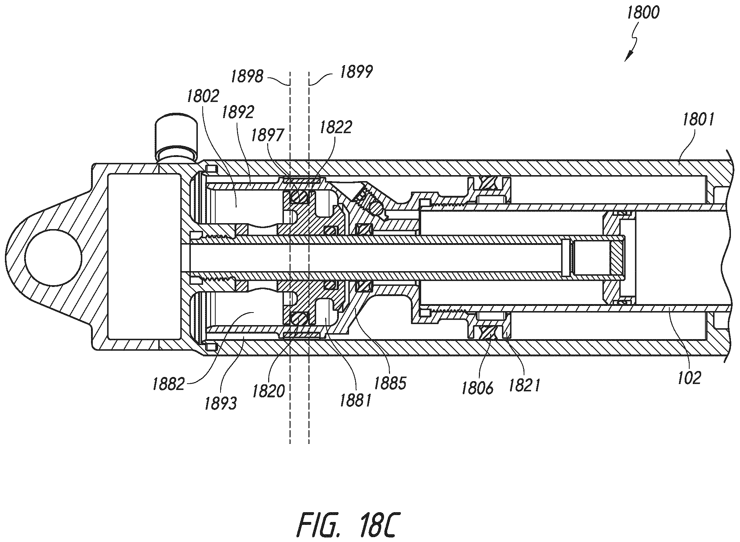

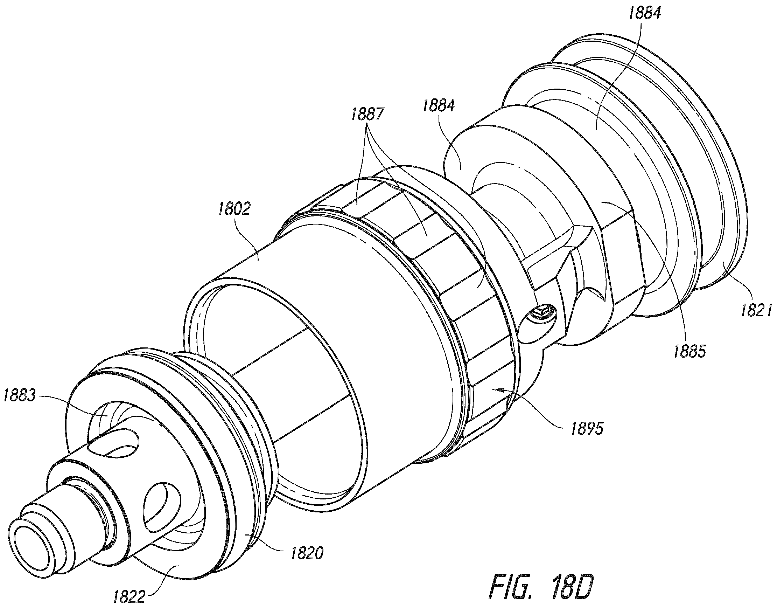

FIGS. 18A-18D illustrate another embodiment of an air spring 1800. FIGS. 18A, 18B, and 18C are cross-sectional views of the air spring 1800 in an extended position, an intermediate position, and a compressed position, respectively. FIG. 18D is a perspective view of certain components of the air spring 1800 isolated from the rest of the assembly.

The air spring 1800 includes many of the same or similar features as air spring 1700 described above, and the same or similar reference numbers are used to refer to the same or similar components. For example, like the air spring 1700, the air spring 1800 can include a damping assembly 155 that can damp movement of the output shaft, body, or member 102 using damping fluid within damping chamber 114, and such damping may be adjusted by damping mechanism 1756 and damping knob 1757.

With reference to FIG. 18A, the air spring 1800 comprises a first body or member 1801 that comprises a first wall 1891 that at least partially defines a first chamber 1811. A second body or member 102 is slidably coupled to the first body or member 1801 in order to cause a distance between the eyelets 104 and 105 to increase or decrease between extended and compressed positions of the air spring 1800.

Air spring 1800 further comprises a first piston 1821 that comprises a seal 1806 that seals against the first wall 1891 of the first body or member 1801. The first piston 1821 is desirably affixed to the second body or member 102 such that movement of the second body 102 will result in corresponding movement of the first piston 1821 with respect to the first body or member 1801. The first chamber 1811 desirably comprises a pressurized gas therein, and thus movement of the first piston 1821 from the extended position (shown in FIG. 18A) toward the intermediate position (shown in FIG. 18B) will cause a volume of the gas within the first chamber 1811 to decrease, increasing the pressure of the gas and increasing the resistance to compression.

With continued reference to FIG. 18A, the air spring 1800 further comprises a second piston 1822 that is in a fixed position with respect to the first body or member 1801. Specifically, the second piston 1822 is positioned at an opposite end of the first body or member 1801 as the end the first piston 1821 is positioned at the extended position, and the second piston 1822 extends into the first chamber 1811 in a direction toward the first piston 1821. In this embodiment, the second 1822 is affixed to a shaft 1896 that is in a fixed position with respect to the first body or member 1801 (through cap 1730 that is affixed to the first body or member 1801), but other embodiments may attach the second piston 1822 differently, such as attaching it directly to the first body or member 1801. In some embodiments, the second piston 1822 may be referred to as a plunger.

With continued reference to FIG. 18A, the air spring further comprises a cup 1802 that includes an annular second wall 1892 extending a direction toward the second piston 1822. In some embodiments, the cup may act as a sleeve, and in such cases may be referred to as a sleeve. The cup 1802 is desirably in a fixed position with respect to the first piston 1821, and thus the cup 1802 slides or translates with respect to the first body or member 1801 along with the first piston 1821. In this embodiment, the cup 1802 and the first piston 1821 are both part of a single body, in this case a sealhead 1885. Other embodiments may form the cup 1802 and first piston 1821 from separate components that are otherwise attached together or connected in a fashion that will cause them to move together when the air spring compresses or extends. Including both the first piston 1821 and the cup 1802 on the sealhead 1885 can be beneficial, however, such as to create a more compact assembly, to make an assembly that is easier and/or less costly to manufacture, to make an assembly that has fewer tolerance stack-up issues, and/or the like.

The sealhead 1885 forms a relatively long component, and it can be desirable to help guide the cup 1802 as the air spring 1800 compresses, such as to help keep the cup 1802 in alignment, to help avoid binding of the air spring 1800, and/or the like. The air spring 1800 comprises a bushing 1895 that is attached to an outer surface of the cup 1802 and configured to slidably engaged the first wall 1891 in order to guide the cup 1802. Desirably, the bushing 1895 does not seal against the first wall 1891, in order to allow the pressurized gas within the first chamber 1811 to pass around the bushing 1895 in order to act on the first piston 1821. Accordingly, the bushing 1895 may include one or more voids, grooves, holes, and/or the like that allow an outer surface of the bushing 1895 to have a relatively close fit to the first wall 1891, while not overly restricting gas flow around the bushing 1895. With reference to FIG. 18D, this perspective view shows a plurality of such voids 1887 in the bushing 1895.

In the extended position (as shown in FIG. 18A), the pressurized gas within the first chamber 1811 is desirably a single volume or amount of gas that acts on the first piston 1821 to bias the air spring to the extended position and that expands to fill the first chamber 1811, including the space within the cup 1802, the space between bushing 1895 and first piston 1821, and the space between bushing 1895 and the opposite end of the first chamber 1811 that is beyond the second piston 1822 (including the annular space 1893 between the cup 1802 and the first wall 1891). Stated another way, the second piston 1822 comprises a seal groove 1897 within which is positioned a seal 1820 that can seal against the second wall 1892 of the cup 1802 (as shown in FIGS. 18B and 18C). First and second ends of the seal groove 1897 can define a first plane 1899 and a second plane 1898, respectively. The second piston 1822 and the seal 1820 of the second piston 1822 are desirably sized such that, in the extended position, the pressurized gas within the first chamber 1811 can pass between the seal 1820 and the first wall 1891, thus positioning the single volume or amount of gas within the first chamber 1811 on both sides of the first plane 1899 and second plane 1898.

Turning to FIG. 18B, this figure shows the air spring 1800 in an intermediate position, where the seal 1820 of the second piston 1822 has started to enter the cup 1802 and sealed against the wall 1892. Similar to as described above with reference to air spring 1700, the cup 1802 may comprise a ramp or tapered region 1887 that helps to guide the cup into engagement with the seal 1820. Also similar to as described above with reference to air spring 1700, once in the intermediate position, the pressurized gas that did exist as a single volume or amount of pressurized gas is now desirably split into a first volume or portion of gas 1881 within the cup 1802, and a second volume or portion of gas 1882 that is positioned outside of the cup 1802 (such as, for example, behind the second piston 1822, within the annular space 1893 between the cup 1802 and the first body 1801, and within the space between the bushing 1895 and the first piston 1821). As the air spring 1800 continues to compress toward the compressed position (shown in FIG. 18C), the spring rate of the spring will increase at a higher rate than if the pressurized gas had remained as a single volume or amount of gas, due to the compression of the first volume or portion of gas 1881 by the cup 1802 sliding over the second piston 1822. For example, a spring rate with a steep increase near the end of stroke, similar to as shown by the dashed line in the graph of FIG. 8 discussed above, may be exhibited by the air spring 1800.

With reference to FIGS. 18B and 18C, it can be seen that in the intermediate and compressed positions, the first end of the second piston seal groove 1897 defined by the first plane 1899 is exposed to the first volume or portion of gas 1881, and the second end of the second piston seal groove 1897 defined by the second plane 1898 is exposed to the second volume or portion of gas 1882. Similar to as discussed above with respect to air spring 1700, the second piston 1822 can comprise one or more voids that allow tuning or adjustment of the relative sizes of the first and second volumes or portions of gas 1881, 1882 in the intermediate and compressed positions. Specifically, in this embodiment, the second piston 1822 comprises an annular void 1883 (shown also in FIG. 18D), that allows at least a portion of the second volume or portion of gas 1882 to extend into the cup 1802 beyond the second plane 1898. Although not shown in these figures, a similar void could be positioned on the opposite side of the second piston 1822 in order to allow at least a portion of the first volume or portion of gas 1881 to extend beyond the first plane 1899.

With reference to FIG. 18D, this figure shows that the sealhead 1885 can also comprise a plurality of voids 1884 (similar to voids 1784 of FIG. 17E) that can allow adjustment of the relative size of the second volume or portion of gas 1882 relative to the first volume or portion of gas 1881 in the intermediate and compressed positions.

Similar to as discussed above with respect to air spring 1700, one benefit of the air spring 1800 design over various other air spring designs is that the spring rate characteristics can be tuned in various ways in order to meet a particular desired spring rate curve or characteristic. For example, as can be seen in FIGS. 18B and 18C, even after the second piston 1822 seals against the second wall 1892 of the cup 1802 and thus separates the pressurized gas into two separate volumes or portions of gas 1881, 1882, both of the separate volumes or portions of gas 1881, 1882 will continue to bias the air spring toward the extended position. Specifically, the second volume or portion of gas 1882 will continue to act on the first piston 1821, while the first volume or portion of gas 1881 will act on the second piston 1822. By having both volumes or portions of gas continue to act on the pistons, adjustments to the components that define the sizes of the chambers that these volumes or portions of gas exist within (and/or changes to relative diameters of the pistons 1821, 1822) can be used to fine tune the spring curve characteristics between the intermediate position of FIG. 18B and the compressed position of FIG. 18C. Stated another way, once the gas is split into two separate volumes 1881 and 1882, the two volumes or portions of gas essentially operate as separate air springs, that are acting in parallel on the output shaft 102. Adjustments made to the relative volumes of these parallel air springs and/or to the relative diameters of pistons 1821, 1822 can help to more finely tune the operating characteristics of the air spring 1800. For example, the air spring 1800 may be tuned such that the jump in spring rate near the compressed position (e.g., the jump in spring rate indicated by the dashed line in FIG. 8), is less abrupt than in the dashed line shown in FIG. 8, but still exhibits a higher slope than a standard air spring in that area (e.g., than the solid line in FIG. 8).

For example, the characteristics of how the second volume or portion of gas 1882 continues to act on the first piston 1821 between the intermediate and compressed positions can be controlled by, among other things, the length of the shaft 1896, the size of the void 1883, the size of the annular space 1893 between the cup 1802 and first body 1801, and the length of the annular wall 1892 of the cup 1802. Further, the characteristics of how the first volume or portion of gas 1881 acts on the second piston 1822 can be controlled by, among other things, the inner diameter of the wall 1892 of the cup 1802, the depth of the cup 1820 (e.g., the length of the annular wall 1892), and the presence and size of one or more voids in the piston 1822 (e.g., similar to void 1883, but on the opposite side of the piston).

### Additional Example Air Spring with Increased Spring Rate Near Compressed Position

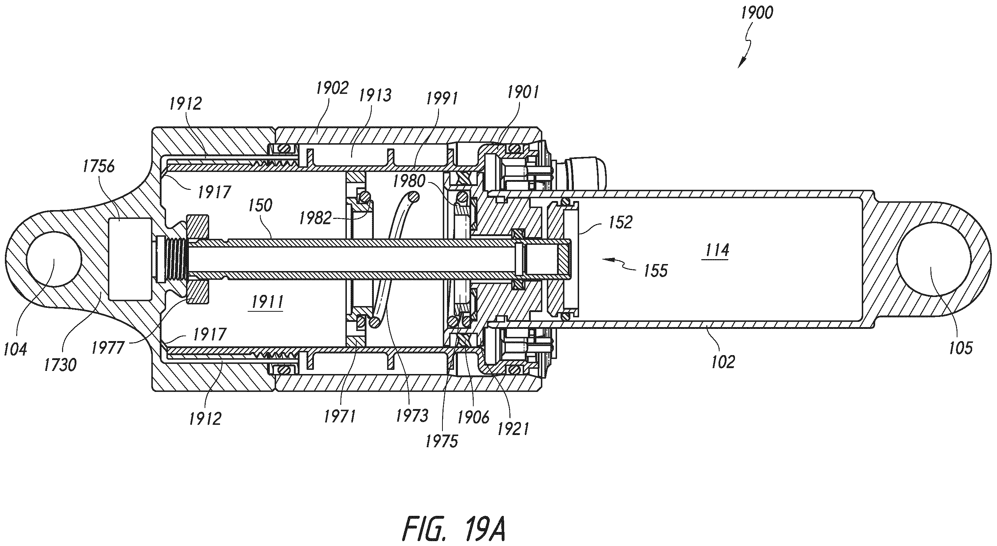

FIGS. 19A-19D illustrate another embodiment of an air spring 1900. Air spring 1900 includes many of the same or similar features as air springs 1700 and 1800 described above, and the same or similar reference numbers are used to refer to the same or similar components. For example, the air spring 1900 can include the same or similar damping assembly 155 that operates to damp motion of the output shaft or third body 102 with respect to the first body 1901, using damping fluid within damping chamber 114, and such damping may be adjusted by damping mechanism 1756 and damping knob (not shown, but may be similar to damping knob 134 of FIG. 3A).

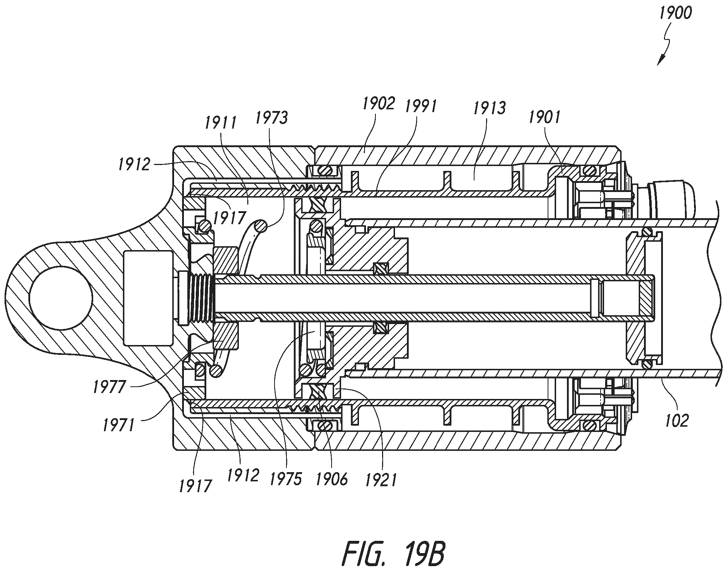

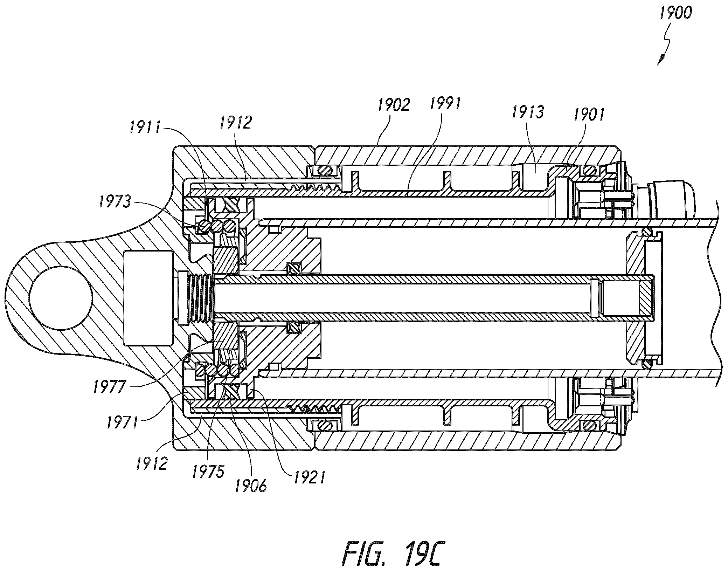

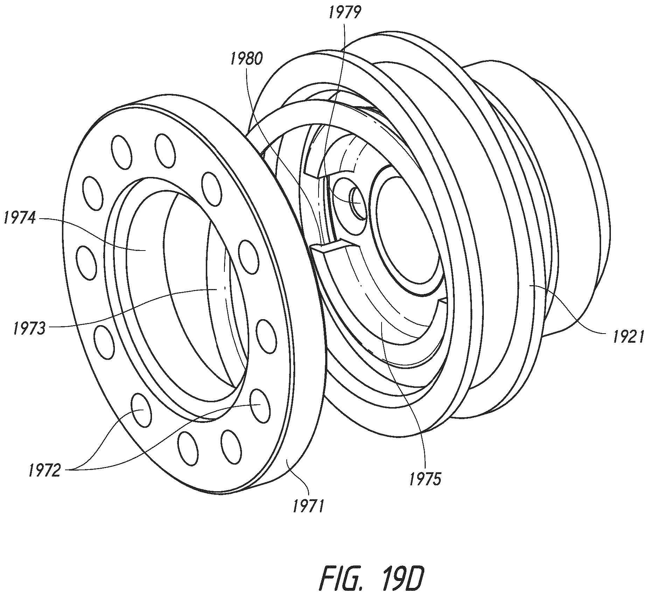

FIGS. 19A, 19B, and 19C are cross-sectional views of the air spring 1900 in an extended position, intermediate position, and compressed position, respectively. FIG. 19D is a perspective view of certain components of the air spring 1900 isolated from the rest of the assembly. With reference to FIG. 19A, air spring 1900 comprises a first body or member 1901 that includes a first wall 1991 that at least partially defines a first chamber 1911. The air spring 1900 further comprises a second body or member 1902 that at least partially defines a second chamber 1913. A plurality of openings 1917 in the first wall 1991 of the first body or member 1901 each lead to one of a plurality of flow passages 1912 that allow fluid communication between the first chamber 1911 and the second chamber 1913.

The air spring 1900 further comprises a first piston 1921 that is fixed to the output shaft or third member 102 and thus can slide with respect to the first body or member 1901 when the air spring compresses or extends (e.g., when eyelets 104 and 105 get closer to one another or further from one another). The first piston 1921 comprises a seal 1906 that seals against the first wall 1991 of the first body or member 1901. Compression of the air spring will desirably compress a pressurized gas that is within the first chamber 1911 and second chamber 1913, thus increasing a pressure of the gas and increasing resistance to compression of the air spring.

With continued reference to FIG. 19A, the air spring 1900 further comprises a flow restrictor 1971 that is biased to move with the first piston 1921, but that is movable relative the piston when further movement of the flow restrictor is blocked. For example, in this embodiment, the flow restrictor 1971 is compliantly coupled to the first piston 1921 by a mechanical spring 1973. Additional details of the flow restrictor 1971, mechanical spring 1973, and first piston 1921 can be seen in the perspective view of FIG. 19D. For example, the mechanical spring 1973 is desirably affixed to the first piston 1921 by a mechanical spring retainer 1975. The mechanical spring retainer 1975 may include, for example, one or more lips 1980 that capture a portion of the mechanical spring 1973 in a space between the lips 1980 and a surface of the first piston 1921. The mechanical spring retainer 1975 may be affixed to the first piston 1921 in a number of ways including, for example, by placing one or more screws in countersunk holes 1979 (see FIG. 19D). In some embodiments, the first piston 1921 includes an integral lip or similar feature that retains the mechanical spring 1973 to the first piston 1921. Similarly, the flow restrictor 1971 include one or more lips 1982 (see FIG. 19A) that capture and retain an end of the mechanical spring 1973 with respect to the flow restrictor 1971. Although this embodiment utilizes a single mechanical coil spring 1973, other embodiments may use alternative means of compliantly coupling the flow restrictor 1971 to the first piston 1921, such as using a plurality of mechanical springs, using a bellows, using one or more additional air springs, and/or the like.

Desirably, the mechanical spring 1973 is in a relaxed state in the extended position (as seen in FIG. 19A) and in the intermediate position (as seen in FIG. 19B), and the mechanical spring 1973 compresses from the relaxed state to a compressed state as the air spring moves from the intermediate position of FIG. 19B to the compressed position of FIG. 19C. As used herein, the term "relaxed state" when referring to the mechanical spring 1973 refers to the state the mechanical spring 1973 will be in if an external force is not being applied to the flow restrictor 1971 (e.g., a force external to the piston and flow restrictor subassembly of FIG. 19D, such as a force applied by contact between the flow restrictor 1971 and the cap 1730). For example, although not included in the embodiment depicted in FIG. 19A, some embodiments may include an extent-limiting feature that is affixed to the first piston 1921 and limits how far the flow restrictor 1971 can move away from the first piston 1921. In such a configuration, the mechanical spring 1973 may have a longer relaxed state if the mechanical spring 1973 were not in the flow restrictor/first piston subassembly, but the term relaxed state as used herein is referring to the furthest the mechanical spring 1973 will be extended when it is in the flow restrictor/first piston subassembly (e.g., the subassembly shown in FIG. 19D), and the air spring is in a position in which an external force is not being applied to the flow restrictor 1971 to force it towards the first piston 1921 (e.g., a position between and including the extended position of FIG. 19A and the intermediate position of FIG. 19B). The relaxed state of the mechanical spring 1973 shown in FIGS. 19A and 19B corresponds to the flow restrictor 1971 being positioned a first distance from the piston 1921, and the compressed state of the mechanical spring 1973 shown in FIG. 19C corresponds to the flow restrictor 1971 being positioned a second distance from the piston 1921, with the second distance being less than the first distance.

As the air spring 1900 compresses from the extended position (shown in FIG. 19A) to the intermediate position (shown in FIG. 19B), the first piston 1921 will compress the gas that is within the first chamber 1911 and within the second chamber 1913 (via fluid communication through the openings 1917 and flow passages 1912). When the air spring 1900 reaches the intermediate position (shown in FIG. 19B), the flow restrictor 1971 is desirably positioned such that an outer surface of the flow restrictor 1971 covers the openings 1917, and thus restricts flow through the flow passages 1912. In some embodiments, the flow restrictor 1971 may completely seal off the openings 1917 (such as by addition of an O-ring type seal to the flow restrictor 1971 that creates a pneumatic seal), but in some embodiments there may still be at least some potential flow present, such as due to tolerances between the outer surface of the flow restrictor 1971 and the first wall 1991 that form a sliding fit between the components. It should be noted, however, that even if a pneumatic seal is not formed between the flow restrictor 1971 and the openings 1917, the flow restrictor 1971 can desirably restrict flow through the openings 1917 sufficiently to significantly affect the spring rate of the air spring when the flow restrictor 1971 covers the openings 1917.

As the air spring compresses from the intermediate position (shown in FIG. 19B) to the compressed position (shown in FIG. 19C), the spring rate of the air spring will rise at a faster rate than it would if gas flow through the openings 1917 were not restricted. For example, a spring rate with a steep increase near the end of stroke, similar to as shown by the dashed line in the graph of FIG. 8 discussed above, may be exhibited by the air spring 1900. Further, as the air spring compresses from the intermediate position to the compressed position, the flow restrictor 1971 will remain stationary with respect to the openings 1917, while the first piston 1921 continues to move toward the compressed position and the mechanical spring 1973 compresses. When the air spring rebounds or starts to extend from the compressed position to the intermediate position, the first piston 1921 will move toward the extended position, while the flow restrictor 1971 will remain covering the openings 1917 until the mechanical spring 1973 has again expanded into the relaxed state. Once the mechanical spring has expanded into the relaxed state, the flow restrictor 1971 will then move along with the first piston 1921 toward the extended position (shown in FIG. 19A).

Making the flow restrictor 1971 movable with respect to the first piston 1971 (such as compliantly coupling the flow restrictor 1971 to the first piston 1921) can have a number of benefits. For example, such a design can enable the benefits of increasing a spring rate toward the end of stroke while maintaining a relatively small package or overall envelope size. For example, such a design enables positioning of the openings 1917 at an end of the first wall 1991. If the openings 1917 were positioned at the end of the first wall 1991, but the flow restrictor 1971 were not compliantly coupled to the first piston 1921 (e.g., it were rigidly coupled to the first piston 1921), then the spring rate benefits would not be achieved, because the openings 1917 would only become covered at the end of stroke or the fully compressed position of the air spring. The performance characteristics of the air spring 1900 can also be tuned or adjusted in various ways, including changing the relaxed state length of the mechanical spring 1973 (in other words, changing at what point in the air spring stroke the flow restrictor 1971 starts to cover the openings), changing the relative sizes of the first chamber 1911 and the second chamber 1913, and the like.

With continued reference to FIGS. 19A-19C, the air spring 1900 in this embodiment further comprises a spacer 1977 attached at an end of the first body or member 1901 (e.g., attached to cap 1730 that is attached to first body 1901) and extending into the first chamber 1911. Desirably, the spacer 1977 is sized such that it can slidably engaged the inner diameter of the flow restrictor 1971 and/or the mechanical spring retainer 1975, thus helping to center the flow restrictor 1971 and/or the first piston 1921 in the compressed position (as shown in FIG. 19C). In some embodiments, the spacer 1977 comprises an acetyl material, and the flow restrictor 1971 comprises a polytetrafluoroethylene material. Other embodiments may use other materials.

With reference to FIG. 19D, it can be seen that the flow restrictor 1971 comprises a plurality of openings, including the central opening 1974 and a plurality of additional openings 1972 spaced about the annular ring. These openings can be beneficial, for example, such as to allow gas to flow therethrough as the air spring 1900 moves between the extended and compressed positions.

### Additional Information

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein. Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of the device as implemented.

Certain features that are described in this specification in the context of separate implementations also can be implemented in combination in a single implementation. Conversely, various features that are described in the context of a single implementation also can be implemented in multiple implementations separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

In describing the present technology, the following terminology may have been used: The singular forms "a," "an," and "the" include plural referents unless the context clearly dictates otherwise. Thus, for example, reference to an item includes reference to one or more items. The term "ones" refers to one, two, or more, and generally applies to the selection of some or all of a quantity. The term "plurality" refers to two or more of an item. The term "about" means quantities, dimensions, sizes, formulations, parameters, shapes and other characteristics need not be exact, but may be approximated and/or larger or smaller, as desired, reflecting acceptable tolerances, conversion factors, rounding off, measurement error and the like and other factors known to those of skill in the art. The term "substantially" means that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide. Numerical data may be expressed or presented herein in a range format. It is to be understood that such a range format is used merely for convenience and brevity and thus should be interpreted flexibly to include not only the numerical values explicitly recited as the limits of the range, but also interpreted to include all of the individual numerical values or sub-ranges encompassed within that range as if each numerical value and sub-range is explicitly recited. As an illustration, a numerical range of "about 1 to 5" should be interpreted to include not only the explicitly recited values of about 1 to about 5, but also include individual values and sub-ranges within the indicated range. Thus, included in this numerical range are individual values such as 2, 3 and 4 and sub-ranges such as 1-3, 2-4 and 3-5, etc. This same principle applies to ranges reciting only one numerical value (e.g., "greater than about 1") and should apply regardless of the breadth of the range or the characteristics being described. A plurality of items may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. Furthermore, where the terms "and" and "or" are used in conjunction with a list of items, they are to be interpreted broadly, in that any one or more of the listed items may be used alone or in combination with other listed items. The term "alternatively" refers to selection of one of two or more alternatives, and is not intended to limit the selection to only those listed alternatives or to only one of the listed alternatives at a time, unless the context clearly indicates otherwise.

It should be noted that various changes and modifications to the presently preferred embodiments described herein will be apparent to those skilled in the art. Such changes and modifications may be made without departing from the spirit and scope of the invention and without diminishing its attendant advantages. For instance, various components may be repositioned as desired. It is therefore intended that such changes and modifications be included within the scope of the invention. Moreover, not all of the features, aspects and advantages are necessarily required to practice the present invention. Accordingly, the scope of the present invention is intended to be defined only by the claims that follow.

## Claims

1. An air spring comprising:
a first body comprising a first wall;
a first piston slideably coupled to the first body, wherein the first piston comprises a seal that seals against the first wall, the first body and the first piston at least partially forming a first chamber having a volume containing an amount of gas, such that sliding of the first piston with respect to the first wall will change the volume of the first chamber;
a second piston that is in a fixed position with respect to the first piston, the second piston comprising a smaller diameter than the first piston such that a seal of the second piston does not seal against the first wall,
wherein the first piston and the second piston can move together between an extended position, an intermediate position, and a compressed position with respect to the first body; and
a cup comprising a second wall that extends into the first chamber toward the first piston, the second wall positioned such that:
in the extended position, the seal of the second piston does not seal against the second wall, and at least a portion of the amount of gas is positioned within the cup and at least a portion of the amount of gas is positioned radially outward of the second wall within a space between the cup and the first body, the amount of gas being able to flow between all areas where the amount of gas is contained;
in the intermediate position, the seal of the second piston seals against the second wall, separating the amount of gas into a first portion of gas and a second portion of gas that are sealed off from one another, with at least a portion of the first portion of gas being positioned within the cup and at least a portion of the second portion of gas being positioned radially outward of the second wall within the space between the cup and the first body; and
as the first piston and the second piston move from the intermediate position to the compressed position, a spring rate of the air spring will increase at a higher rate than if the second piston were not sealed against the second wall and the first portion of gas and the second portion of gas were not sealed off from one another.

2. The air spring of Claim 1, wherein the second piston comprises one or more voids that extend in a direction away from the cup such that, at least in the intermediate position, at least a portion of the first portion of gas is positioned outside of the cup;
preferably wherein the one or more voids comprises one or more of: an annular groove or a blind hole extending in the direction away from the cup.

3. The air spring of Claim 1, wherein the first piston and the second piston are part of a single body that can slide with respect to the first body.

4. The air spring of Claim 1, further comprising a second body that at least partially defines a second chamber, the second chamber being fluidly coupled to the first chamber such that:
in the extended position, at least a portion of the amount of gas is positioned within the second chamber; and
in the intermediate position, at least a portion of the second portion of gas is positioned within the second chamber.

5. The air spring of Claim 4,
wherein the second body is positioned such that the second chamber surrounds the first chamber; or
wherein the second chamber is fluidly coupled to the first chamber through one or more flow passages that each remain open throughout a full stroke of the air spring.

6. An air spring comprising:
a first body comprising a first wall;
a first piston slideably coupled to the first body, wherein the first piston comprises a seal that seals against the first wall, the first body and the first piston at least partially forming a first chamber having a volume containing an amount of gas, such that sliding of the first piston with respect to the first wall will change the volume of the first chamber;
a cup that is in a fixed position with respect to the first piston, the cup comprising a second wall that extends into the first chamber away from the first piston, wherein the first piston and the cup can move together between an extended position, an intermediate position, and a compressed position with respect to the first body; and
a second piston that is in a fixed position with respect to the first body, the second piston comprising a smaller diameter than the first piston such that a seal of the second piston does not seal against the first wall,
wherein the cup and the second piston are configured such that:
in the extended position, the seal of the second piston does not seal against the second wall, and at least a portion of the amount of gas is positioned within the cup and at least a portion of the amount of gas is positioned radially outward of the second wall within a space between the cup and the first body, the amount of gas being able to flow between all areas where the amount of gas is contained;
in the intermediate position, the seal of the second piston seals against the second wall, separating the amount of gas into a first portion of gas and a second portion of gas that are sealed off from one another, with at least a portion of the first portion of gas being positioned within the cup and at least a portion of the second portion of gas being positioned radially outward of the second wall within the space between the cup and the first body; and
as the first piston and the cup move from the intermediate position to the compressed position, a spring rate of the air spring will increase at a higher rate than if the second piston were not sealed against the second wall and the first portion of gas and the second portion of gas were not sealed off from one another.

7. The air spring of Claim 6,
further comprising a bushing slidably engaged with the first wall to center the cup with respect to the first wall, wherein the bushing does not pneumatically seal against the first wall; or
wherein the cup and the first piston are part of single body that can slide with respect to the first body; or
wherein the second piston is fixed to the first body by a shaft that extends into the first chamber toward the first piston; or
wherein, the second piston comprises a seal groove that defines a first plane at a first end of the groove and a second plane at a second end of the groove, and wherein, in the extended position, at least a portion of the amount of gas is positioned on both sides of both the first plane and the second plane.

8. The air spring of Claim 6, wherein the second piston comprises a seal groove that defines a first plane at a first end of the groove and a second plane at a second end of the groove,
wherein, in the intermediate position and the compressed position, the first end of the groove is exposed to the first portion of gas and the second end of the groove is exposed to the second portion of gas, and
wherein the second piston comprises one or more voids that enable one or both of the following:
at least a portion of the first portion of gas to be positioned beyond the first plane in a direction away from the first piston, or
at least a portion of the second portion of gas to be positioned within the cup beyond the second plane in a direction toward the first piston:
preferably wherein the one or more voids comprises one or more of: an annular groove or a blind hole.

9. An air spring comprising:
a first body comprising a first wall that at least partially defines a first chamber;
a second body that at least partially defines a second chamber,
wherein the first wall comprises one or more openings that allow fluid communication between the first chamber and the second chamber;
a piston slideably coupled to the first body, wherein the piston comprises a seal that seals against the first wall such that sliding of the first piston with respect to the first wall will change a volume of a gas within the first chamber and the second chamber; and
a flow restrictor that is biased to move with the piston, but is movable relative the piston when further movement of the flow restrictor is blocked, wherein the flow restrictor is shaped to restrict flow through the one or more openings when the flow restrictor covers the one or more openings, wherein the piston can move between an extended position, an intermediate position, and a compressed position with respect to the first body, and the piston and flow restrictor and configured such that:
in the extended position, the flow restrictor is a first distance from the piston and the flow restrictor does not cover the one or more openings;
in the intermediate position, the flow restrictor remains the first distance from the piston and the flow restrictor covers the one or more openings to restrict flow through the one or more openings; and
as the piston moves from the intermediate position to the compressed position, the piston will move toward the flow restrictor until the flow restrictor is a second distance from the piston, less than the first distance, and the flow restrictor will remain covering the one or more openings to restrict flow through the one or more openings, and a spring rate of the air spring will increase at a higher rate than if flow were not restricted through the one or more openings.

10. The air spring of Claim 9, wherein the flow restrictor comprises an annular ring that includes one or more openings through which a gas present in the first chamber can pass.

11. The air spring of Claim 10, further comprising a spacer extending into the first chamber from an end of the first body, the spacer being shaped and positioned to engage the central opening of the flow restrictor when in the intermediate position or the compressed position;
preferably wherein the spacer and the flow restrictor each comprise acetal or polytetrafluoroethylene.

12. The air spring of Claim 9,
wherein the second body is positioned such that the second chamber surrounds the first chamber; or
wherein the one or more openings are positioned at an end of the first wall; or
wherein the flow restrictor is compliantly coupled to the piston by a mechanical spring.

13. An air spring comprising:
a first body comprising a first wall;
a first piston slideably coupled to the first body, wherein the first piston comprises a seal that seals against the first wall, the first body and the first piston at least partially forming a first chamber having a volume containing an amount of gas, such that sliding of the first piston with respect to the first wall will change the volume of the first chamber;
a second piston comprising a smaller diameter than the first piston such that a seal of the second piston does not seal against the first wall; and
a cup comprising a second wall that extends into the first chamber,
wherein the second piston and the cup comprise one of a first configuration or a second configuration,
wherein the first configuration comprises:
the second piston is in a fixed position with respect to the first piston, wherein the first piston and the second piston can move together between an extended position, an intermediate position, and a compressed position with respect to the first body, and
the second wall of the cup extends into the first chamber toward the first piston,
wherein the second configuration comprises:
the cup is in a fixed position with respect to the first piston, with the second wall of the cup extending into the first chamber away from the first piston, wherein the first piston and the cup can move together between an extended position, an intermediate position, and a compressed position with respect to the first body; and
the second piston is in a fixed position with respect to the first body, and
wherein the cup and the second piston are configured such that:
in the extended position, the seal of the second piston does not seal against the second wall, and at least a portion of the amount of gas is positioned within the cup and at least a portion of the amount of gas is positioned radially outward of the second wall within a space between the cup and the first body, the amount of gas being able to flow between all areas where the amount of gas is contained;
in the intermediate position, the seal of the second piston seals against the second wall, separating the amount of gas into a first portion of gas and a second portion of gas that are sealed off from one another, with at least a portion of the first portion of gas being positioned within the cup and at least a portion of the second portion of gas being positioned radially outward of the second wall within the space between the cup and the first body; and
as the first piston moves from the intermediate position to the compressed position, a spring rate of the air spring will increase at a higher rate than if the second piston were not sealed against the second wall and the first portion of gas and the second portion of gas were not sealed off from one another.

14. The air spring of Claim 13, wherein the second piston and the cup comprise the first configuration.

15. The air spring of Claim 13, wherein the second piston and the cup comprise the second configuration.

16. The air spring of Claim 15, wherein the second piston comprises one or more voids that extend in a direction away from the cup such that, at least in the intermediate position, at least a portion of the first portion of gas is positioned outside of the cup.

17. The air spring of Claim 16, wherein the one or more voids comprises one or more of: an annular groove or a blind hole extending in the direction away from the cup.

18. The air spring of any one of Claims 13, 16, and 17, wherein the first piston and the second piston are part of a single body that can slide with respect to the first body.

19. The air spring of any one of Claims 13 and 16-18, further comprising a second body that at least partially defines a second chamber, the second chamber being fluidly coupled to the first chamber such that:
in the extended position, at least a portion of the amount of gas is positioned within the second chamber; and
in the intermediate position, at least a portion of the second portion of gas is positioned within the second chamber:
preferably wherein the second body is positioned such that the second chamber surrounds the first chamber.

20. The air spring of Claim 19, wherein the second chamber is fluidly coupled to the first chamber through one or more flow passages that each remain open throughout a full stroke of the air spring.

21. The air spring of Claim 15, further comprising a bushing slidably engaged with the first wall to center the cup with respect to the first wall, wherein the bushing does not pneumatically seal against the first wall.

22. The air spring of any one of Claims 15 and 21, wherein the cup and the first piston are part of single body that can slide with respect to the first body.

23. The air spring of any one of Claims 15, 21, and 22, wherein the second piston is fixed to the first body by a shaft that extends into the first chamber toward the first piston.

24. The air spring of any one of Claims 15 and 21-23,
wherein, the second piston comprises a seal groove that defines a first plane at a first end of the groove and a second plane at a second end of the groove, and wherein, in the extended position, at least a portion of the amount of gas is positioned on both sides of both the first plane and the second plane; or
wherein the second piston comprises a seal groove that defines a first plane at a first end of the groove and a second plane at a second end of the groove, and wherein, in the intermediate position and the compressed position, the first end of the groove is exposed to the first portion of gas and the second end of the groove is exposed to the second portion of gas, and wherein the second piston comprises one or more voids that enable one or both of the following:
at least a portion of the first portion of gas to be positioned beyond the first plane in a direction away from the first piston, or
at least a portion of the second portion of gas to be positioned within the cup beyond the second plane in a direction toward the first piston;
preferably wherein the one or more voids comprises one or more of: an annular groove or a blind hole.
